(19) Europäisches Patentamt
European Patent Office
Office européen des brevets

(11) **EP 2 505 491 B1**

(12) **FASCICULE DE BREVET EUROPEEN**

(45) Date de publication et mention
de la délivrance du brevet:
**12.03.2014 Bulletin 2014/11**

(21) Numéro de dépôt: **12001795.9**

(22) Date de dépôt: **16.03.2012**

(51) Int Cl.:
***B64C 1/14*** *(2006.01)*    ***B60J 9/02*** *(2006.01)*
***B61D 19/02*** *(2006.01)*    ***B64C 1/32*** *(2006.01)*

(54) **Encadrement étanche pour largage sécurisé de panneau amovible**

Dichte Einrahmung zum gesicherten Lösen eines abnehmbaren Paneels

Sealed framework for secured jettisoning of a detachable panel

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **31.03.2011 FR 1100949**

(43) Date de publication de la demande:
**03.10.2012 Bulletin 2012/40**

(73) Titulaire: **Airbus Helicopters
13725 Marignane Cedex (FR)**

(72) Inventeur: **Raspic, Nicolas
13002 Marseille (DE)**

(74) Mandataire: **Pouillot, Laurent Pierre Paul
GPI & Associés
Europarc de Pichaury
Bât. B2 - 1er Et.
1330 Rue Guillibert de la Lauzière
13856 Aix-en-Provence cedex 3 (FR)**

(56) Documents cités:
DE-A1- 2 433 525    DE-U- 1 715 159
FR-A- 1 390 412    FR-A1- 2 205 622
FR-A1- 2 766 156    US-A- 2 654 919

**Description**

L'invention concerne le domaine technique des encadrements étanches de panneaux amovibles de secours, pour cloisonnements de véhicules.

Divers types de véhicules sont concernés par l'invention, qui trouve son origine dans le secteur de l'industrie aéronautique. Par exemple, l'invention peut s'appliquer à des aéronefs, notamment à voilure tournante.

Sans limitation, l'invention peut s'appliquer à un hélicoptère, dans lequel, le cloisonnement fait e.g. partie d'un fuselage. L'invention peut ainsi s'appliquer à des hélicoptères à grandes vitesses et portées dits « hybrides », par exemple tels que décrits dans les documents FR2916418, FR2916419 ou FR2916420.

Dans un autre exemple, l'aéronef à voilure tournante est un drone dont un poste de pilotage est déporté hors-bord, et le panneau amovible peut alors typiquement obturer une trappe d'accès d'urgence à l'intérieur de son fuselage. Dans des applications aéronautiques, le cloisonnement ou fuselage est tel que décrit par le document FR2896768.

Par suite, un « panneau amovible » de cloisonnement désigne ici divers types de structures, notamment en forme d'hublots ou d'éléments de cloisonnement du véhicule. Un tel panneau amovible peut donc être au moins en partie opaque et / ou au moins en partie translucide, voire transparent.

On parle de « panneaux largables » si un pareil panneau est dit amovible en cas « de secours » ou « d'urgence », bien qu'en état de fonctionnement normal du véhicule, il est rigidement fixé au (c'est-à-dire maintenu dans le) cloisonnement. On peut le considérer alors comme un élément « intégré » ou habillage du fuselage.

Mais en cas d'urgence, ce panneau amovible de secours peut être désolidarisé et séparé du reste du cloisonnement du véhicule, pour libérer un accès vers l'intérieur du véhicule et / ou vers l'extérieur de celui-ci.

Ceci étant exposé, on comprend qu'un « encadrement étanche » pour un tel panneau amovible de secours est une structure qui relie ce panneau amovible au cloisonnement qui l'entoure, en état de fonctionnement normal du véhicule. Dans cet état, ce panneau est relié par l'encadrement étanche au cloisonnement du véhicule, de manière suffisamment rigide et hermétique pour satisfaire aux conditions d'utilisation du véhicule.

En langage aéronautique, si le panneau est amovible en cas « de secours », on appelle « joints de largage » ces encadrements étanches (avec leurs structures de maintien et détachement éventuellement). D'autres encadrements étanches courants appelés « joints à clé » sont évoqués plus loin.

Le problème technique à la base de l'invention est exposé ici.

En premier lieu, il est souhaitable d'améliorer significativement les performances sécuritaires des joints de largage existants, notamment la facilité de largage.

Ceci vise à encore mieux interdire tout disfonctionnement inacceptable qui pourrait être rencontré, avec les joints de largage existants, mais également pour suivre les contraintes techniques auxquelles sont soumis les aéronefs modernes, qui sont accrues.

En effet, e.g. pour les hélicoptères à grande vitesse et portée dits « hybrides », on constate un durcissement des contraintes de :

- résistance des matériaux (tant statiques que dynamiques) ;

- dimensionnelles avec des hublots plus étendus en surfaces,

- maintien en état normal de fonctionnement avec des panneaux amovibles plus pesants (par exemples les hublots à vitrage multiple d'isolation luxueux dits « VIP ») ;

- tenue (e.g. à la pression) à vitesses élevées ;

- température, e.g. à vitesses et altitudes de vol élevées ; et

- masse embarquée, les « chasses au poids » étant draconiennes sur les aéronefs modernes.

Rappelons brièvement la réglementation applicable relativement aux performances sécuritaires des joints de largage existants, destinés aux aéronefs à voilure tournante. Actuellement, cette réglementation est définie par la Décision finale EC2003/16/RM du 14/11/2003, émise par l'Agence Européenne de Sécurité Aérienne (i.e. « European Aviation Safety Agency ») qui vise les spécifications de certification des aéronefs à rotor de grande taille. Cette Décision est souvent désignée par « CS-29 ».

Dans cette Décision finale EC2003/16/RM, le paragraphe CS 29.809 vise les agencements d'issues d'urgences ou « Emergency exit arrangement ».

Cette Décision prévoit notamment, dans ses paragraphes :

(a) : que chaque issue d'urgence doit constituer une porte déplaçable ou une trappe (en anglais : « hatch ») dans le cloisonnement ou paroi du fuselage externe et doit permettre de fournir une ouverture sans obstruction vers l'extérieur ;

(b) : que chaque issue d'urgence doit pouvoir être ouverte depuis l'intérieur et depuis l'extérieur;

(c) : les moyens d'ouverture de chaque issue d'urgence doivent être simples et de compréhension évidente, et doivent également ne pas requérir d'effort exceptionnel pour leur activation ;

(d) : chaque issue d'urgence doit posséder des moyens de verrouillage propres et aptes à empêcher toute ouverture en vol par inadvertance ou résultat d'un défaut ou panne mécanique ;

(e) chaque issue d'urgence doit posséder des moyens pour minimiser les possibilités de détérioration en cas de choc mineur de l'aéronef, si le fuselage subit des déformations sous l'effet de forces d'inertie finales (voir CS29.783).

Par ailleurs, le paragraphe AC 29-2C §29.809 de cette Décision prévoit notamment :

- Pour les procédures, que les efforts requis permettant d'ouvrir l'issue de secours, tels qu'évalués durant les essais (tests selon §29.807f) soient bien compris dans l'intervalle compris entre 40 livres (18,14 kg) et 50 livres (22,68 kg), tandis qu'il est recommandé qu'une personne de stature légère, telle qu'une femme d'un poids de l'ordre de 90 à 100 livres, soit sélectionnée pour opérer les essais et démonstrations d'ouverture. En tout cas, la charge nécessaire en moyenne pour actionner le mécanisme de relâchement et pour ouvrir l'issue de secours ne doit pas excéder 50 livres (22,68 kg), tandis que la charge maximale individuelle pour une série d'essais ne doit pas excéder 55 pounds (24,95 kg).

En outre, le paragraphe AC 29 §29.803(d) de cette Décision prévoit notamment, que les aéronefs à voilure tournante disposant d'issues de secours en particulier, le nombre maximal de passagers assis à bord, y compris les membres d'équipage tels que requis par les règlements de vol, doivent pouvoir être évacués hors de l'aéronef vers le sol, en 90 secondes au plus.

Bien que généralement satisfaisants, les encadrements étanches de largage actuels pourraient mériter des améliorations sur deux points évoquée plus bas. Mais aussi, ces encadrements pourraient éventuellement compliquer la certification voire compromettre la sécurité désirée pour des aéronefs futurs ayant des caractéristiques de vol et / ou des structures de cloisonnements plus contraignantes qu'actuellement.

Si l'encadrement étanche est un joint à clé de largage, des évolutions des caractéristiques structurelles du panneau amovible de secours (son poids, ses dimensions, ses propriétés physiques, etc.) peuvent impacter directement le fonctionnement d'ouverture et donc l'évacuation (dans le temps maximal de 90 secondes) tel que défini par la réglementation applicable actuellement.

L'évacuation doit être opérationnelle sur l'enveloppe totale de températures auxquelles l'aéronef peut être exposé en service.

Dans ce contexte, il serait souhaitable que les encadrements étanches de largage puissent être certifiés en tant qu'issue de secours, sans avoir à prévoir le largage d'une autre structure de cloisonnement plus lourde, typiquement dans le cas où le panneau amovible est un hublot et la structure de cloisonnement qui le maintient au sein du fuselage est une porte. Par exemple dans le cas d'un hublot de porte, il est problématique que ce dernier ne puisse pas être certifié en tant qu'issue de secours, et oblige à certifier l'ensemble de la porte où ce hublot est installé.

En pratique, l'arrière plan technologique de l'invention ne permet pas d'atteindre ces buts.

Outre les documents FR2896768, FR2916418, FR2916419 ou FR2916420 et la Décision finale EC2003/16/RM du 14/11/2003 déjà évoqués, citons d'autres documents de l'état de la technique.

D'autres documents relatifs à des encadrements de panneaux sont discutés.

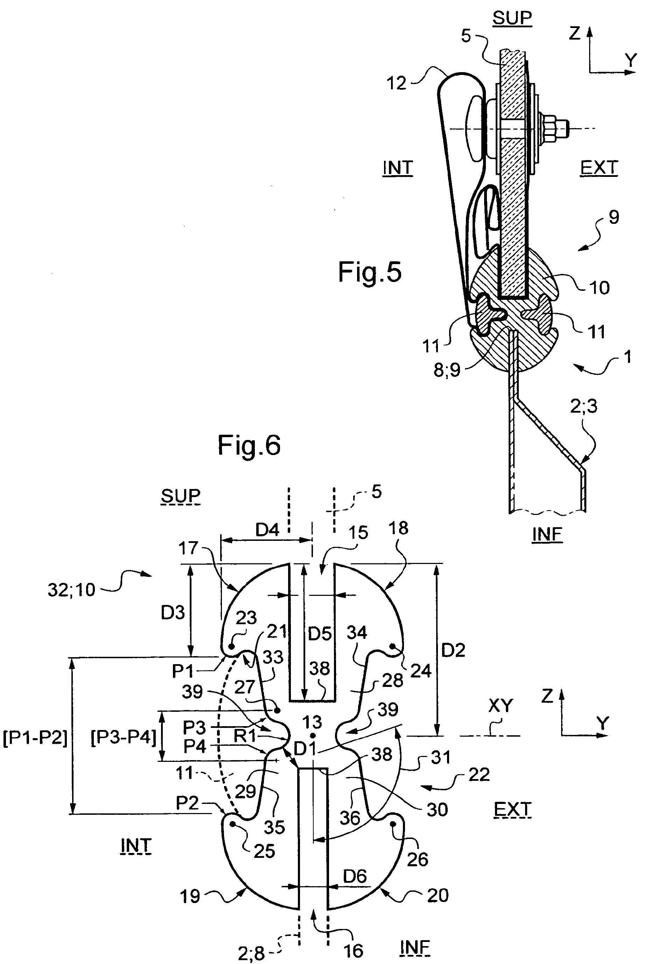

Le document FR1390412, qui représente l'art antérieur le plus proche, décrit des panneaux ouvrants de véhicule. Ce document propose d'augmenter la déformabilité d'un joint, les angles qu'il est possible d'atteindre (figure 6) sont limités.

Le document US 2, 654, 919 montre un autre exemple de joint d'encadrement.

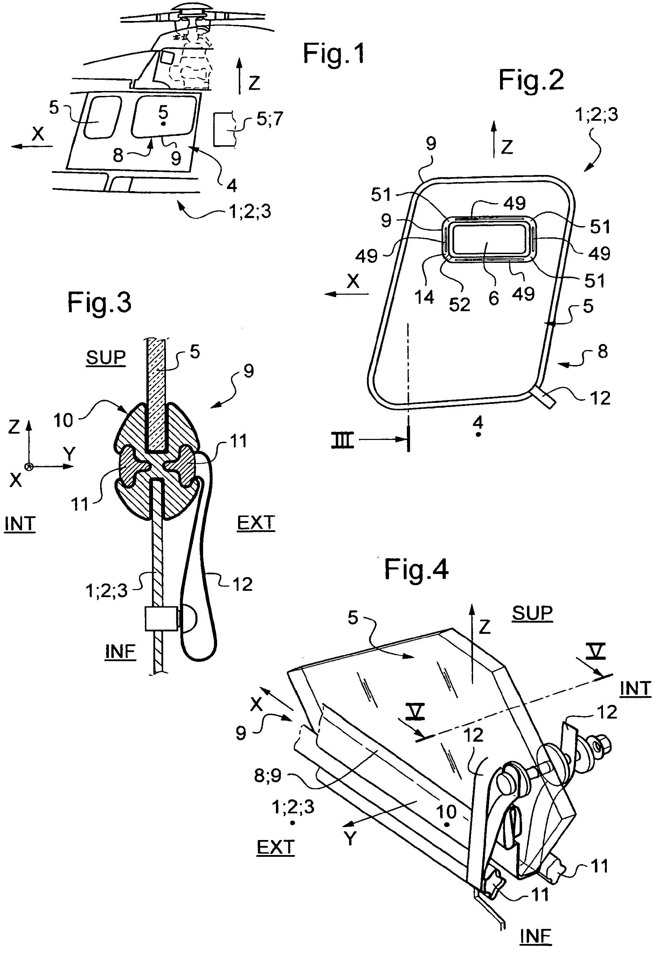

Le document FR2205622 décrit un joint d'encadrement de glace avec des bourrelets, une gorge et une charnière d'attache. Ce document propose d'augmenter la déformabilité d'un joint, les angles qu'il est possible d'atteindre (figure 2) sont limités.

Le document DE171519 décrit un encadrement de vitre permettant un largage, avec en face interne des moyens de découpe de l'encadrement à poignée.

Le document DE24335325 décrit un joint d'encadrement de glace avec une gorge externe où est logée une charnière d'attache. Ce document propose un joint dont l'angle de déformation est limité en amplitude, et possible sur une face seulement du joint.

Le document DE916501 décrit un joint unique muni d'une première zone et d'une deuxième zone, extrémales et liées par une zone intermédiaire. Ce joint unique ne semble pas applicable à un aéronef, du fait des contraintes aérodynamiques notamment.

Le document DE20217925 décrit un hublot à éjection d'urgence pour voiture ferroviaire ou autobus. Ce document ne décrit aucun moyen permettant comme en aéronautique, d'allier un maintien en place de vitrage sous des efforts aérodynamiques de vol et une éjection possible du hublot sous des charges maximales. Ce document décrit un dispositif complexe de poignée et de tringlerie à tirer pour éjecter la vitre.

Le document EP0249560 décrit un profilé en forme de U qui chausse le chant d'une vitre et qui coopère avec un profilé de fermeture.

Le document EP0175981 décrit un châssis, pour fixer une fenêtre contre un cadre de véhicule automobile. Ce châssis comporte une rainure de réception pour accueillir une vitre et un élément d'adaptation à fixer au cadre du véhicule automobile. Conjointement, le châssis et l'élément d'adaptation constituent un joint de solidarisation. Ce document ne décrit pas un panneau amovible de secours pour aéronef, ni comment permettre à un tel panneau amovible en termes de dilatations thermiques en vol, ou comment assurer une raideur garantissant un maintien en position d'un tel panneau malgré des efforts aérodynamiques qu'il subirait en vol, tout en restant étanche. Par ailleurs, les hublots de grande taille d'aéronef doivent être largables afin d'autoriser l'évacuation des passagers en cas d'incidents. Cette fonction n'est pas décrite par le document EP0175981. Ce document ne décrit donc pas le largage des hublots de grande taille qui libérerait des ouvertures dans le fuselage de l'aéronef, ces ouvertures étant particulièrement utiles si les accès classiques de l'aéronef sont bloqués.

Le document EP0748710 décrit un dispositif de dégagement de vitrage en cas d'urgence, pour véhicule ferroviaire. Un vitrage est maintenu en position via un cordon périphérique que l'on doit couper afin de pouvoir libérer le vitrage à dégager et extraire les occupants. Ce dispositif de dégagement est lourd et complexe, et comporte de nombreux constituants assemblés. De plus, ce dispositif de dégagement oblige à détériorer le joint ou le cordon pour pouvoir dégager le vitrage.

Le document FR2858950 est relatif à un module d'étanchéité d'une vitre fixe, et donc à priori pas apte à être enlevée.

Le document FR2548256 décrit deux éléments, à savoir une moulure et une parclose qui coopèrent pour former deux rainures. Deux lèvres de la moulure définissent une rainure alors qu'une lèvre de cette moulure coopère avec une lèvre de la parclose pour former la deuxième rainure.

Le document FR2766156 décrit un encadrement de vitre permettant le largage d'un hublot. Des moyens de découpe entraînés par traction sur au moins une partie du périmètre de la vitre sont prévus pour séparer l'encadrement en plusieurs tronçons, et ainsi désolidariser la vitre du support. Ce joint est dédié exclusivement à une seule forme (géométrie, dimensions) donnée de hublot. Chaque forme de hublot nécessite la fabrication d'un joint spécifique, ce qui génère des coûts relativement importants. Une fois l'âme du joint découpée, l'encadrement n'est pas réutilisable. Pour prendre en compte les dilatations différentielles de la structure porteuse et du hublot, il conviendrait de grossir exagérément le joint, au détriment de sa masse et de son aspect visuel.

Le document FR2935347 décrit un encadrement étanche pour grand hublot d'aéronef à voilure tournante. Cet encadrement comporte un premier joint et un deuxième joint d'étanchéité, un moyen de maintien amovible, avec deux voiles externes rigides qui enserrent en état de montage, les joints ainsi que le hublot sur la structure porteuse.

Les principaux buts de l'invention sont exposés maintenant.

L'un de ces buts est de rendre plus aisées, rapides et sûres les manipulations d'évacuation hors de cette structure porteuse.

Par ailleurs, il serait pratique que l'encadrement étanche soit réutilisable après évacuation, autrement dit à démontage réversible et repositionnable. Par exemple, l'invention devrait permettre le fait de simplement désolidariser mutuellement (i.e. "déclipser" de manière non destructive) deux constituants de l'encadrement étanche, pour séparer facilement et sans les altérer, le panneau amovible de secours de son cloisonnement d'appartenance, sachant qu'il serait ensuite possible d'à nouveau solidariser mutuellement (i.e. fixer rigidement) ces mêmes éléments de l'encadrement étanche, pour remettre en état normal de fonctionnement, ce panneau sur son cloisonnement d'appartenance.

Un tel encadrement étanche réutilisable et à démontage réversible aurait un double intérêt : d'une part faciliter la maintenance du véhicule, et le remplacement de l'encadrement ou du panneau si nécessaire, mais aussi de participer à des manipulations d'évacuation aisées, rapides et sûres.

L'invention a également pour but d'assurer que ces panneaux amovibles de secours soient en accord avec les impératifs de certification applicables, e.g. pour les aéronefs à voilure tournante. On souligne que ces impératifs visent notamment les :

- temps d'évacuation maximal, c'est-à-dire de passage depuis un état de montage (ou de fonctionnement normal ou de montage) du panneau amovible de secours sur sa structure porteuse de destination, jusqu'à un état d'évacuation (cas d'urgence) où ce hublot est libéré de la structure porteuse (pour permettre le passage vers le dehors) ;

- forces maximales de maintien en état de montage mais aussi à exercer pour les manipulations d'évacuation ;

- plages de températures auxquelles les structures porteuses, et donc les encadrements étanches de panneaux amovibles de secours en question, sont exposées.

Ces impératifs élevés de maintien des panneaux amovibles de secours en état de montage sont antagonistes avec les forces maximales qui doivent aboutir à l'état d'évacuation.

L'un des objectifs de l'invention est de proposer un encadrement étanche tel que défini par les caractéristiques techniques de la revendication 1 et apte à solidariser à une structure porteuse d'aéronef diverses formes de panneaux amovibles de secours, éventuellement de grande taille, tout en lui ménageant des fonctionnalités accrues, et ce à moindre coût.

A cet effet, des caractéristiques de divers aspects de l'invention sont définies par les revendications dépendantes.

Selon un objet, l'invention vise un joint de pourtour destiné à un encadrement étanche pour un panneau largable depuis une baie de cloisonnement de véhicule. Ce joint de pourtour est de type généralement tubulaire et principalement étendu suivant une direction longitudinale, ce joint de pourtour comportant au moins :

- un tronc central de forme sensiblement prismatique, principalement allongé suivant la direction longitudinale pour former deux extrémités d'embout et adaptable par conformation longitudinale à un profil d'ouverture interne de la baie du véhicule de destination ;

- une rainure de réception supérieure et une rainure de réception inférieure, étendues d'une extrémité d'embout à l'autre du tronc central, sensiblement suivant un plan d'élévation longitudinal médian ;

- respectivement : de part et d'autre transversalement de la rainure de réception supérieure, une aile de confinement supérieure intérieure et une aile de confinement supérieure extérieure, ainsi que de part et d'autre transversalement de la rainure de réception inférieure, le joint de pourtour possédant respectivement une aile de confinement inférieure intérieure et une aile de confinement inférieure extérieure ;

- délimité entre l'aile de confinement supérieure intérieure et l'aile de confinement inférieure intérieure, un logement d'insertion intérieur pour une clé de maintien intérieure, et délimité entre l'aile de confinement supérieure extérieure et l'aile de confinement inférieure extérieure, un logement d'insertion extérieur pour une clé de maintien extérieure ;

- sur chaque aile de confinement, une arête saillante d'agrafage élastique pour l'une des clés de maintien, étendue sensiblement en élévation longitudinalement, ces arêtes saillantes d'agrafage élastique étant en regard deux à deux en élévation de part et d'autre respectivement de l'un des logements d'insertion intérieur ; et

- reliant chacune des quatre ailes de confinement au tronc central, respectivement un épaulement de pliage longitudinal.

Une caractéristique prévoit un angle de débattement d'au moins 90° dans un plan perpendiculaire à la direction longitudinale, d'au moins une aile de confinement, par déformation de l'épaulement de pliage vers une concavité du logement d'insertion correspondant, depuis un état de fonctionnement normal jusqu'à un état de libération du panneau largable. En état de libération, l'arête saillante de l'aile de confinement pliée est en appui contre une section de butée du logement d'insertion correspondant, section de butée située sensiblement entre le tronc central et l'aile de confinement identiquement intérieure ou extérieure qui est opposée à l'aile de confinement rabattue.

Une autre caractéristique prévoit que le joint de pourtour respecte une relation reliant : une demi-dimension D2 maximale d'élévation du joint de pourtour, une demi-dimension D4 maximale transversale du joint de pourtour et une demi-dimension D3 hors logement d'insertion en élévation de ce joint de pourtour. La demi-dimension D3 hors logement est étendue entre une extrémité distale soit supérieure soit inférieure d'une aile de confinement correspondante qui est opposée en élévation au tronc central et une extrémité distale d'une arête saillante formée par cette aile de confinement. Une relation entre demi-dimension D2 d'élévation, demi-dimension D4 transversale et demi-dimension D3 hors logement est telle que : ½ D2 ≥ D3 et ½ D2 ≥ D4.

Encore une autre caractéristique prévoit que le joint de pourtour respecte une relation telle que D2 ≥ D5 où D2 est une demi-dimension maximale d'élévation du joint de pourtour et D5 est la dimension maximale en élévation d'une rainure de réception, cette dimension D5 étant supérieure de sensiblement 5 à 10% de D2, à une distance [P1-P2] ou dimension minimale en élévation d'un logement d'insertion, entre les deux arêtes saillantes de ce logement d'insertion.

Selon une caractéristique, une distance minimale D1 du tronc central, entre une section de butée du logement d'insertion et une surface de fond de la rainure de réception la plus étroite transversalement du joint de pourtour (rainure de réception soit inférieure soit supérieure), est au plus égale à une dimension D6 transversale de ladite surface de fond de la rainure de réception la plus étroite et / ou la distance minimale D1 est au plus égale à la moitié d'une dimension D6 transversale d'une surface de fond de l'autre rainure de réception, respectivement soit supérieure soit inférieure, la plus large transversalement et opposée en élévation à la rainure de réception la plus étroite.

Une caractéristique prévoit que le tronc central présente, sensiblement au milieu en élévation d'au moins un logement d'insertion soit intérieur soit extérieur, une gorge de dégagement, étendue longitudinalement d'une extrémité d'embout à l'autre du tronc central, cette gorge de dégagement présentant dans un plan d'élévation transversal, un profil arrondi concave sensiblement défini par un rayon de courbure R1. La dimension de ce rayon de courbure R1 respecte la relation : [P3-P4] $\geq$ 3 x R1, où [P3-P4] est une distance en élévation entre un point de rebroussement P3 supérieur et un point de rebroussement P4 supérieur d'un logement d'insertion soit intérieur soit extérieur, logement d'insertion où est disposée ladite gorge de dégagement, de sorte qu'en état de libération les points de rebroussement, respectivement supérieur et inférieur, restent sensiblement distants l'un de l'autre tandis que l'arête saillante d'agrafage élastique dudit logement d'insertion est en appui contre la section de butée correspondante.

Suivant une réalisation, au moins une arête saillante respectivement supérieure ou inférieure, d'un même logement d'insertion est de profil externe complémentaire, vu en section d'élévation transversale, avec un renfoncement d'accueil respectivement inférieur ou supérieur. Ce renfoncement d'accueil du logement d'insertion est localisé à l'emplacement de la section de butée correspondante, pour éloigner cette dernière de ladite arête saillante et ainsi permettre par un état de libération dit compact, un angle de débattement dit accru, e.g. de 95° à 105°.

Encore une caractéristique prévoit qu'au moins un matériau constitutif dudit joint de pourtour est choisi parmi (tableau n°1):

| K01 | NF L 17 151 | NFL172505 | NF L 17 261 | NFL17261 |
|---|---|---|---|---|
| K02 | Elastomères Silicones Classe 51 | Caoutchoucs Silicones Classe 50 D 8 | Caoutchoucs fluor silicones Classe 61 | Caoutchoucs fluor silicones Classe 61 |
| K03 | 51 A 8 | 50D8 | 61 D 7 | 61 D 8 |
| K04 | 80±5 | 80±5 | 70±5 | 80±5 |
| K05 | 5 | 5 | 6 | 5,5 |
| K06 | 60 | 125 | 125 | 120 |
| K07 | / | 40 | 45 | 50 |
| K08 | / | -60 | -55 | -55 |
| K09 | -30°C à +100°C | -55°C à +225°C | -55°C à +180°C | -55°C à +180°C |

où :

- K01 indique la désignation dudit matériau selon une Norme française NF,

- K02 indique la dénomination du Matériau,

- K03 indique un Code dudit matériau,

- K04 indique une valeur de Dureté Shore A dudit matériau,

- K05 indique une valeur de Résistance minimale à la Traction (en MPa) dudit matériau,

- K06 indique une valeur d'Allongement minimal à la rupture (en %) dudit matériau,

- K07 indique une Déformation rémanente après compression (après 70h à 100°C dans l'air, en %) dudit matériau,

- K08 indique une valeur de Température Limite de Non Fragilité (en °C) dudit matériau, et

- K09 indique un intervalle de Températures d'emploi en service prolongé.

Selon une réalisation du joint de pourtour, celui-ci est une pièce monobloc, venue de moulage injection et / ou extrusion dont le matériau comporte un caoutchouc silicone de Classe supérieure à 50 selon une Norme Française NF, par exemple ledit matériau est celui désigné par NFL17.250-5 ou NFL17.261.

Un autre objet de l'invention vise un encadrement étanche pour un panneau largable depuis une baie de cloisonnement de véhicule. Cet encadrement étanche est sensiblement prismatique, principalement allongé suivant une direction longitudinale pour former deux faces d'embouts et adaptable par conformation longitudinale à un profil d'ouverture interne de la baie du véhicule de destination, cet encadrement étanche possédant au moins un joint de pourtour tel qu'exposé.

Une réalisation prévoit que le joint de pourtour est sensiblement symétrique par rapport à un plan médian d'élévation longitudinale, voire par rapport à un plan transversal longitudinal. Chacune de deux clés de maintien respectivement, intérieure et extérieure, présente un profil sensiblement complémentaire à celui du logement d'insertion correspondant, par exemple avec un profil symétrique par rapport audit plan transversal longitudinal.

Selon une réalisation dudit encadrement étanche, le joint de pourtour est sensiblement asymétrique par rapport à un plan médian d'élévation longitudinale et / ou par rapport à un plan médian transversal d'élévation. Par exemple, ce joint de pourtour asymétrique est formé avec un logement d'insertion intérieur où une arête saillante supérieure est plus rapprochée que l'arête saillante inférieure de ce même logement d'insertion intérieur ; tandis qu'un logement d'insertion extérieur présente une arête saillante inférieure plus rapprochée que l'arête saillante inférieure de ce même logement d'insertion, deux clés de maintien respectivement intérieure et extérieure étant de profil sensiblement complémentaires aux logements d'insertion correspondants, typiquement avec un profil d'élévation transversale en ogive à forte convexité respectivement inférieure et supérieure.

Selon une réalisation dudit encadrement étanche, au moins une clé de maintien est une pièce venue de moulage injection et / ou extrusion dont le matériau présente une valeur de Dureté Shore A dudit matériau supérieure à 70 voire 80 selon une Norme Française NF. Par exemple, ledit matériau est celui désigné par NFL17.250-5 ou NFL17.261.

Dans une réalisation, au moins une clé de maintien comporte une cavité de coeur concave dans laquelle est disposé au moins un élément rigide. Par exemple, un élément rigide en forme de lame ou analogue est intégré dans la cavité de coeur concave de ladite clé de maintien, sensiblement d'une face d'embout à l'autre de cet encadrement étanche.

Selon une réalisation, au moins une clé de maintien possède une cavité de coeur concave dite périphérique, étendue d'une face d'embout à la face d'embout opposée de l'encadrement étanche, tandis que plusieurs éléments rigides sont disposés dans des sections d'accueil distinctes de cette cavité de coeur, réparties sur sa périphérie. Par exemple, des sections d'accueil sont agencées dans des tronçons sensiblement rectilignes du coeur concave tandis que des tronçons curvilignes, typiquement correspondant à des coins de panneau largable, sont dénués d'élément rigide. Notamment, au moins un des tronçons curvilignes de la cavité de coeur concave coïncide avec une zone d'amorce de largage de hublot.

Encore un autre objet de l'invention vise un véhicule pourvu d'au moins un cloisonnement qui définit une baie pour un panneau largable, ce dernier étant relié audit cloisonnement par un encadrement étanche. Cet encadrement étanche possède au moins un joint de pourtour tel qu'exposé.

Selon une caractéristique, le véhicule est un aéronef, par exemple à voilure tournante. Par exemple, le cloisonnement est une partie de fuselage ou de porte, le panneau largable un hublot ou trappe analogue et l'encadrement étanche est interchangeable voire forme un encadrement étanche de substitution d'un encadrement distinct.

L'invention et ses avantages connus apparaissent plus en détail dans la description qui suit d'exemples de réalisation donnés à titre illustratif seulement, en référence aux figures annexées.

La figure 1 est une vue schématique partielle d'un véhicule de type aéronef à voilure tournante, à savoir un hélicoptère ou drone, équipé d'au moins un panneau amovible de secours à encadrement étanche, selon l'invention et représenté dans un plan d'élévation longitudinale de sorte que le panneau amovible est sensiblement étendu dans le plan de la figure 1.

La figure 2 est une vue schématique d'un panneau amovible de secours (opaque) à encadrement étanche connu, et représenté dans un plan d'élévation longitudinale et étendu dans le plan de la figure 2.

La figure 3 est une vue schématique en coupe d'un encadrement étanche connu, et représenté dans un plan d'élévation transversale défini par la flèche III sur la figure 2, avec deux clés de largage dont une entourée par une sangle d'extraction, une baie de cloisonnement et un panneau amovible de secours transparent, de type hublot.

La figure 4 est une vue schématique partielle en perspective d'un encadrement étanche connu, similaire à celui de la figure 3, avec deux sangles d'extraction de clés de largage intérieure et extérieure, un cloisonnement de fuselage et un hublot formant panneau amovible de secours transparent.

La figure 5 est une vue schématique de l'encadrement étanche connu de la figure 4, en coupe suivant un plan d'élévation transversale, défini par la ligne V-V sur cette figure 4.

La figure 6 est une vue schématique en section d'une réalisation de joint de pourtour d'encadrement étanche selon l'invention, en coupe suivant un plan d'élévation transversale, ce joint de pourtour étant de type dit symétrique suivant un plan longitudinal d'élévation, et montré en état de montage.

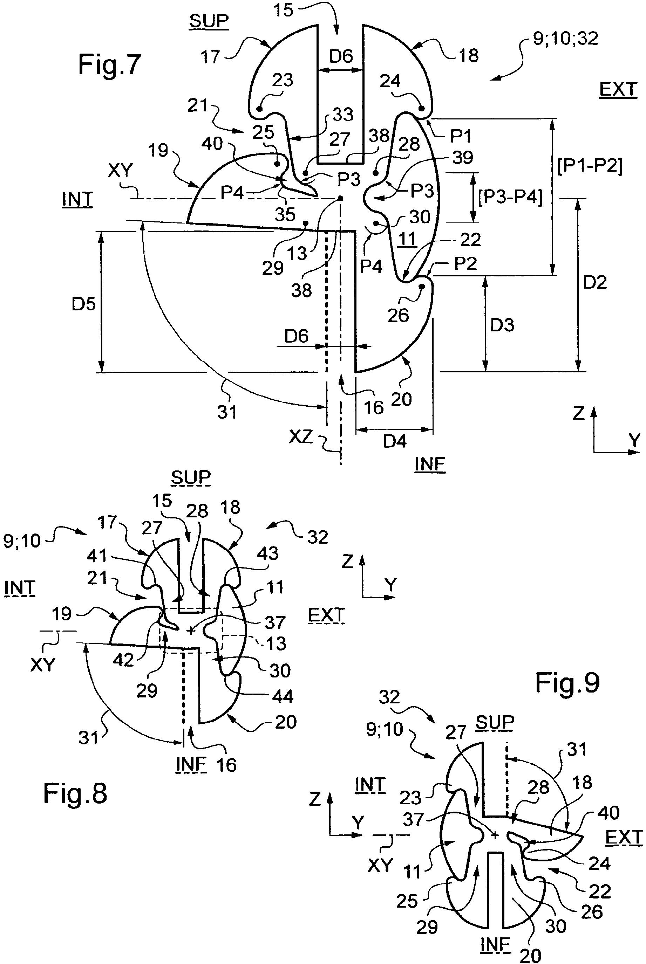

La figure 7 est une vue schématique qui intègre la réalisation de la figure 6 et montre un encadrement étanche selon l'invention, en coupe suivant un plan d'élévation transversale, avec en bas et à gauche une aile de confinement mobilisable intérieure et inférieure représentée en position rabattue (état de libération), suivant un angle d'ouverture dit « moyen » (proche d'un plan longitudinal sécant, e.g. 95° d'amplitude) notamment en vue d'une évacuation ; tandis que d'un côté extérieur de l'encadrement étanche, une clé de maintien dite « large » (ici, pleine et monobloc) est montée sur cet encadrement, les ailes de confinement étant alors en état normal de fonctionnement.

La figure 8 est une vue schématique similaire à celle de la figure 7, mais dans une réalisation de l'invention où l'angle de débattement est de l'ordre de 100°.

La figure 9 est une vue schématique d'une autre réalisation « symétrique » d'encadrement étanche selon l'invention, à angle d'ouverture dit « accru » (nettement au-delà du plan longitudinal sécant, e.g. 105° d'amplitude), en coupe suivant un plan d'élévation transversale, avec en haut et à droite une aile de confinement mobilisable extérieure et supérieure représentée en position rabattue (état libération), tandis que d'un côté intérieur une clé de maintien reste montée sur cet encadrement étanche.

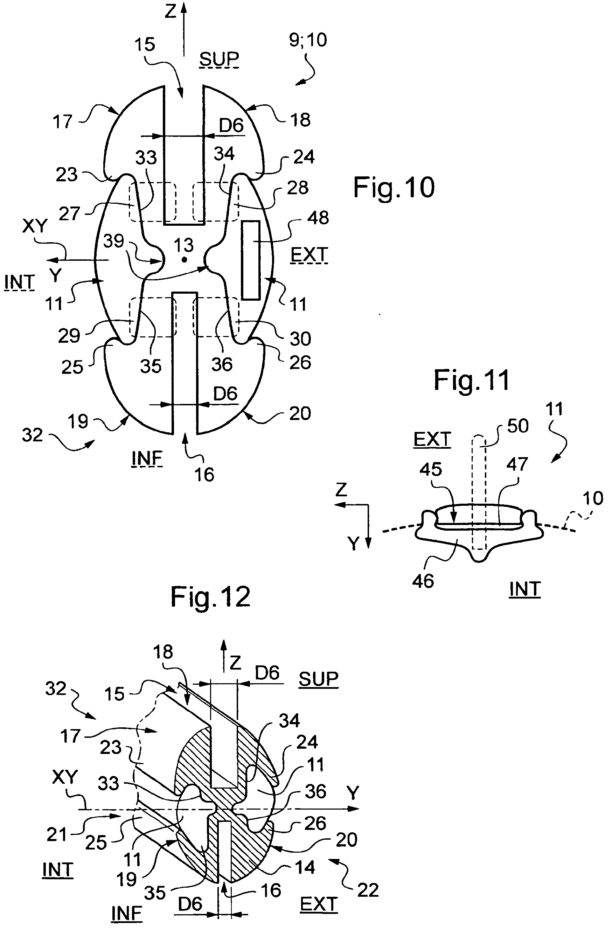

La figure 10 est une vue schématique d'une autre réalisation « symétrique » d'encadrement étanche selon l'invention, à angle d'ouverture dit « accru » (nettement au-delà du plan longitudinal sécant, e.g. 105° d'amplitude), en coupe suivant un plan d'élévation transversale, avec en haut et à droite une aile de confinement mobilisable extérieure et supérieure représentée en position rabattue correspondant à un état d'évacuation, tandis que d'un côté intérieur une clé de maintien monobloc, dite « large », est montée sur cet encadrement étanche. Une clé de maintien extérieure est réalisée par surmoulage direct sur un élément rigide formant lame, de matière synthétique pour former une clé de maintien sans section d'accueil.

La figure 11 est une vue schématique d'une réalisation de clé de maintien pour encadrement étanche selon l'invention, en coupe suivant un plan d'élévation transversale, cette clé de maintien comportant en bas un demi-jonc concave intérieur à gorge longitudinale et rebords d'arêtes externes à moyens d'accrochage par agrafage élastique ou « clipsage », tandis qu'en haut la clé de maintien comporte un autre demi-jonc convexe extérieur à faces supérieures - inférieures pourvues de moyens d'accrochage par « clipsage », cet autre demi-jonc convexe extérieur étant assemblé de manière localement complémentaire au demi-jonc concave intérieur.

La figure 12 est une vue schématique d'une réalisation « asymétrique » d'encadrement étanche selon l'invention, perspective longitudinale depuis un plan d'élévation transversale, avec à droite (extérieur) une aile de confinement supérieure est « courte » tandis qu'une aile de confinement inférieure est « longue » ; à gauche (intérieur), c'est une aile de confinement supérieure qui est « longue» tandis qu'une une aile de confinement inférieure est « courte » ; de chacun des côtés intérieur et extérieur, est respectivement montée entre lesdites aile de confinement, une clé de maintien dite « large », opérant le blocage en état de fonctionnement normal de l'encadrement étanche.

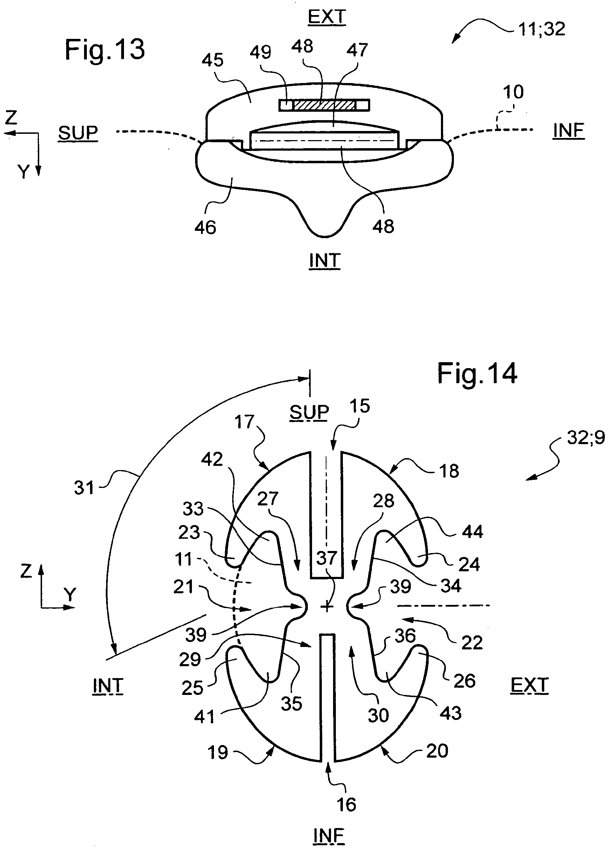

La figure 13 est une vue schématique d'une autre réalisation d'assemblage multi constituants formant clé de maintien « rigidifiée » pour encadrement étanche selon l'invention, similaire à la figure 11, cette clé de maintien comportant un demi-jonc concave intérieur à moyens d'accrochage et un autre demi-jonc convexe extérieur à moyens d'accrochage complémentaires à ceux du demi-jonc concave intérieur, cette clé de maintien comportant en outre une lame de raidissement (par exemple en métal tel qu'aluminium et / ou en matériau composite tel que fibres de carbone et liant et / ou en matière plastique telle que polycarbonate), logée dans une cavité longitudinale interne délimitée par et entre les deux demi-joncs, l'un concave intérieur et l'autre convexe extérieur.

La figure 14 est une vue schématique en section d'une réalisation de joint de pourtour d'encadrement étanche selon l'invention, en coupe suivant un plan d'élévation transversale, avec sur chaque aile de confinement une arête saillante de profil externe complémentaire à celui d'un renfoncement d'accueil localisé à l'emplacement d'une section de butée correspondante du logement d'insertion.

Dans les dessins, où les éléments similaires sont désignés par les mêmes numéros de référence, sont représentées trois directions orthogonales les unes aux autres.

Une direction Z dite d'élévation, correspond aux hauteurs et épaisseurs des structures décrites : les termes haut/bas ou inférieur/supérieur (« INF » / « SUP », e.g. sur les figures 6 à 10) s'y réfèrent. Par simplification, cette direction Z correspond à la verticale de la feuille e.g. sur les figures 6 à 10.

Une autre direction X dite longitudinale, correspond aux longueurs ou dimensions principales des structures décrites. Par simplification, cette direction X est parfois dite horizontale. Par exemple sur les figures 6 à 10, cette direction X correspond à la perpendiculaire au plan de la feuille.

Encore une autre direction Y dite transversale, correspond aux largeurs ou dimensions latérales des structures décrites. Le terme côté s'y réfère. Par simplification, cette direction Y est parfois considérée comme étant horizontale. Sur certaines figures, les notions d'intérieur (« INT », e.g. à gauche sur les figures 6 à 10) et d'extérieur (« EXT », e.g. à droite sur les figures 6 à 10) sont définies suivant la direction transversale Y.

Les directions X et Y définissent conjointement un plan X, Y dit plan longitudinal sécant (perpendiculaire à celui de la feuille sur la figure 6).

Sur la figure 1, la référence numérique 1 désigne de manière générale un véhicule 1, qui constitue l'un des objets de l'invention. Ce véhicule 1 est ici un aéronef. Sans limitation, l'invention est décrite dans son application à des aéronefs à voilures tournantes, notamment des hélicoptères. L'invention peut s'appliquer à des aéronefs à voilures tournantes habitables et / ou à des drones à voilures tournantes.

Le véhicule 1 de la figure 1 est un hélicoptère qui possède au moins un cloisonnement 2, qui par exemple fait partie d'un fuselage 3, comme ceci ressort mieux de la figure 5. Sur la figure 1 une porte articulée 4, fait partie du cloisonnement 2. Ce cloisonnement 2 possède un ou plusieurs panneaux amovibles 5.

Sur la figure 2, ce panneau amovible 5 est opaque, avec une partie transparente 6. Sur la figure 4, ce panneau amovible 5 est entièrement transparent, puisqu'il s'agit d'un vitrage. Sur la figure 1, un panneau amovible 5 arrière est totalement opaque pour former une trappe 7 qui est directement installée sur le cloisonnement 2, c'est-à-dire le fuselage 3.

Chaque panneau amovible 5 est monté sur le cloisonnement 2 du véhicule 1, dans un état de fonctionnement normal du véhicule, suivant lequel le panneau amovible 5 est en position de montage.

Plus précisément, en état de fonctionnement normal du véhicule 1, le panneau amovible 5 est rigidement fixé au véhicule 1, dans une baie 8 dont un pourtour 9 est bien visible sur les figures 4 et 5. Le panneau amovible 5 est évidemment de forme sensiblement complémentaire (et réduite) à celle de la baie 8. Cette baie 8 est de dimensions sensiblement plus étendues pour que le panneau amovible 5 puisse s'y loger, dans sa position de montage.

Pour ces panneaux 5, on parle également de « panneaux largables », lorsqu'ils peuvent servir d'issue ou d'accès de secours, une fois désolidarisés et séparés du cloisonnement 2, c'est-à-dire dans un état de libération.

Le passage de l'état de fonctionnement normal à l'état de libération s'opère en agissant sur un encadrement étanche 9, qui épouse l'intérieur de la baie 8 et l'extérieur dudit panneau 5.

Comme dans les véhicules des figures 1 à 5, l'encadrement étanche 9 est classiquement formé d'une part d'un joint de pourtour 10 et d'autre part d'une paire de clés de maintien 11. Ces clés de maintien 11 sont montées sur le joint de pourtour 10 pour le bloquer en état de fonctionnement normal.

On voit bien sur la figure 4 notamment, qu'un joint de pourtour 10 est un élément allongé, de forme généralement « tubulaire » c'est-à-dire avec une section d'élévation transversale (plan YZ) relativement constante avec des dimensions en longueur (direction X) nettement plus importantes que celles de la section d'élévation transversale.

Sur la figure 3, on voit un encadrement étanche 9 connu avec deux clés de maintien 11 dont une (à droite) entourée par une sangle d'extraction 12, et dans une baie 8 de cloisonnement 2, un panneau amovible de type « largable » i.e. de secours, qui est transparent, de type hublot.

Sur les figures 3 à 5, on voit que les clés de maintien 11 connues, vues en coupe suivant un plan d'élévation transversale, présentent généralement une section en croix, avec quatre parois (jointives, longitudinales et perpendiculaires) relativement « fines » c'est-à-dire « étroites », à la manière de lames. De fait, les formes concaves complémentaires de réception de ces parois sont des cavités en tranchées profondes et étroites.

En se reportant aux figures 6 à 13, on expose diverses réalisations de l'invention.

D'ores et déjà, notons que dans la plupart des réalisations de l'invention, l'encadrement étanche 9 est interchangeable, voire forme un encadrement étanche 9 de substitution d'un encadrement distinct antérieurement monté dans la baie 8.

En effet, en comparant les profils de ces encadrements étanches 9 conformes à l'invention, on voit bien que leurs parties de liaison avec la baie 8 et le panneau largable 5 sont similaires à celles des encadrements 9 connus, par exemple illustrés aux figures 3 à 5.

On décrit ci-après le joint de pourtour 10, dont une réalisation est montrée à la figure 6. Sur les figures, le joint de pourtour 10 est une pièce unitaire c'est-à-dire monobloc, typiquement venue de moulage injection ou extrusion. Ce joint de pourtour 10 comporte au moins :

- un tronc central 13 dont les limites sont montrées en pointillés sur la figure 8). Ce tronc central 13 est de forme sensiblement prismatique, principalement allongé suivant la direction longitudinale X pour former deux extrémités d'embout 14 (voir figures 2 et 12). Ces deux extrémités d'embout 14 sont sensiblement en vis-à-vis une fois l'encadrement étanche 9 monté dans la baie 8. Ainsi le joint de pourtour 10 est conformé en "boucle fermée". Le tronc central 13 est de la sorte adapté par conformation longitudinale, au profil d'ouverture interne de la baie 8 du véhicule 1 de destination,

- une rainure de réception supérieure 15 et une rainure de réception inférieure 16. Ces rainures 15 et 16 sont étendues d'une extrémité d'embout 14 à l'autre (14) du tronc central 13, sensiblement suivant un plan d'élévation longitudinal XZ médian (visible sur la figure 7 en pointillés). Dès maintenant, on remarque sur les figures 6 à 8 notamment, que la rainure supérieure 15 est destinée à recevoir le panneau 5 à étanchéifier, tandis que la rainure inférieure 16 est prévue pour recevoir une partie du cloisonnement 2 (fuselage 3, porte 4 ou autre panneau 5) qui supporte ledit panneau 5 à étanchéifier ;

- respectivement : de part et d'autre transversalement de la rainure de réception supérieure 15, une aile de confinement supérieure intérieure 17 et une aile de confinement supérieure extérieure 18, ainsi que de part et d'autre transversalement de la rainure 16 de réception inférieure, le joint de pourtour 10 possède respectivement, une aile de confinement inférieure intérieure 18 et une aile de confinement inférieure extérieure 19. Les quatre ailes 17, 18, 19 et 20 forment (avec le tronc central 13, duquel elles sont venues de matière), un motif en « croix » ou en « X » vu dans le plan XZ ;

- comme montré sur les figures 6 et 14 notamment, un logement d'insertion intérieur 21 prévu pour recevoir une clé de maintien 11 intérieure, est délimité entre l'aile de confinement supérieure intérieure 17 et l'aile de confinement inférieure intérieure 19. Similairement, délimité entre l'aile de confinement supérieure extérieure 18 et l'aile de confinement inférieure extérieure 20, il est prévu un logement d'insertion extérieur 22, pour recevoir une clé de maintien 11 dite extérieure. Bien que de profils approximativement comparables, les logements 21 et 22 ne sont pas strictement de forme complémentaire à celle de parties correspondantes des clés de maintien 11 qu'ils sont destinés à accueillir : on comprend déjà que l'insertion de chaque clé de maintien 11 dans son logement 21 ou 22, nécessite un engagement en force dans ce logement 21 ou 22, avec une déformation élastique momentanée de certaines parois de celle-ci ;

- le joint de pourtour 10 est configuré de sorte que, sur au moins une aile de confinement 17-20, soit étendue une arête saillante, e.g. 23-26 respectivement. Selon les réalisations de l'invention, un même joint de pourtour 10 peut présenter typiquement 2 ou 4 telles arêtes saillantes. Sur les figures 6-10 par exemple, l'aile de confinement supérieure intérieure 17 porte une arête saillante 23 supérieure intérieure, l'aile de confinement supérieure extérieure 18 porte une arête saillante 24 supérieure extérieure, l'aile de confinement inférieure intérieure 19 porte une arête saillante 25 inférieure intérieure et enfin l'aile de confinement inférieure extérieure 20 porte une arête saillante 26 dite inférieure extérieure. Toutes ces arêtes saillantes 23-26 sont destinées à assumer la même fonction principale: en position ou état de fonctionnement normal, une arête saillante (23-26) doit assurer un maintien en place par agrafage élastique (connu sous le terme de « clipsage » ou « clippage ») de l'une des clés de maintien 11. Ces arêtes saillantes 23-26 i.e. respectivement inférieure/supérieure et intérieure/extérieure, sont étendues sensiblement en élévation et longitudinalement : ces arêtes saillantes 23-26 d'agrafage élastique sont en regard deux à deux (23 avec 25 et 24 avec 26) en élévation suivant la direction Z, de part et d'autre respectivement de l'un des logements d'insertion 22 défini par le joint de pourtour 10 ; et

- toujours au sein d'un joint de pourtour 10 selon l'invention, chacune des quatre ailes de confinement 17-20 est reliée au tronc central 13, respectivement, par un épaulement de pliage (27-30). Sur la figure 10, ces épaulements 27-30 sont désignés par des zones en pointillés, contigües au tronc 13 et formant l'embase de chaque aile de confinement 17-20, le tronc 13 et ces ailes 17-20 étant venues de matière avec lesdits épaulements 27-30 et autres arêtes saillantes 23-26. Sur les figures 6-10 par exemple, l'épaulement de pliage 27 porte l'arête saillante 23, l'épaulement de pliage 28 porte l'arête saillante 24, l'épaulement de pliage 29 porte l'arête saillante 25 et enfin l'épaulement de pliage 30 porte l'arête saillante 26. Ces épaulements de pliage 27-30 sont généralement étendus suivant la direction longitudinale X, chacun entre l'une des rainures de réception (15-16) et l'un des logements d'insertion 21-22.

Ces épaulements 27-30 sont dits "de pliage", du fait de leur principale fonction, à savoir relier et articuler les ailes 17-20 au tronc 13, c'est-à-dire de solidariser de manière permanente le tronc 13 et les ailes (17-20), tout en permettant un pliage de l'aile 17-20 qu'un tel épaulement de pliage (27-30).

Ce pliage inédit est soigneusement prédéterminé et mis en oeuvre pour répondre aux objectifs majeurs de l'invention, notamment assurer un passage de l'état de fonctionnement normal à l'état de libération, de façon sûre, simple et hautement fiable.

D'ailleurs, ce pliage ressort e.g. de la figure 7 où l'épaulement de pliage 29 (Int. /inf.) est soumis à une déformation élastique qui rapproche (en état de libération) l'aile 19 de l'aile 17 intérieure et supérieure. Sur la figure 9, l'épaulement de pliage 28 (sup./ext.) est soumis de la sorte à une déformation élastique qui rapproche (en état de libération) l'aile 18 de l'aile 20. On entend par « déformation élastique » toute modification substantielle de la forme d'une structure, sans altération définitive (e.g. cristalline) majeure, et donc avec un retour en position initiale de cette structure suite à ladite déformation élastique. A l'inverse, on parle de déformation plastique quand la déformation est telle qu'elle est définitive et donc irréversible.

L'une des spécificités de l'invention est que l'agencement prévoit un angle de débattement 31 d'au moins 90°, mesuré dans un plan YZ perpendiculaire à la direction longitudinale X, d'au moins l'une des ailes de confinement (17-20) du tronc 13.

Cet angle de débattement 31, issu de la déformation de pliage d'un épaulement (27-30) correspondant, rapproche l'une des ailes de confinement (17-20) vers une concavité du logement d'insertion 21-22 correspondant, quand on désire faire passer l'encadrement étanche 32 d'un état de fonctionnement normal jusqu'à un état de libération du panneau largable.

En offrant, par sa géométrie spéciale, un angle de débattement 31 d'au moins 90°, le joint 10 et donc plus généralement l'encadrement étanche 32 garantissent qu'en état de libération, on assure une large et pratique voie de passage choisie, pour l'éjection (dégagement hors de la baie 8) du panneau amovible 5. En d'autres termes, une fois en état de libération, il est particulièrement aisé de désolidariser puis séparer à distance l'un de l'autre, le panneau 5 et le cloisonnement 2 sur lequel ce panneau amovible 5 était installé en état normal de fonctionnement.

En outre avec l'invention, le passage vers l'état de libération depuis l'état normal de fonctionnement est spécialement facile, rapide et sûr, même si l'opérateur ne possède pas une force importante et / ou agît dans des conditions difficiles (accident, blessure, urgence, etc.).

Comme sur la figure 7, on voit qu'en état de libération (suite à retrait de la clé de maintien 11 dite intérieure) suite au pliage de l'aile de confinement 19 intérieure et inférieure, l'arête saillante 25 de cette aile 19 repliée, est en appui contre une section de butée 33 du logement d'insertion 21 correspondant. Cette section de butée 33 est située sensiblement entre le tronc central 10 et l'aile de confinement 17 identiquement intérieure, c'est-à-dire l'aile (17) qui est opposée en élévation, à l'aile de confinement 19 rabattue. Autrement dit, l'aile 17 est à l'opposé au sein du logement 21, de l'aile 19 repliée.

Sur les figures 6, 10, 12 et 14, le joint de pourtour 10 possède quatre sections de butée, à savoir la section de butée 33 dite supérieure-intérieure, une section de butée 33 dite supérieure-intérieure, une section de butée 34 dite supérieure-extérieure, une section de butée 35 dite inférieure-intérieure et une section de butée 36 dite inférieure-extérieure. Sur l'exemple de la figure 10, ces sections de butée 33-36 sont situées au droit des épaulements de pliage 27-30 correspondants, voire entre ceux-ci et l'arête saillante (23-26) correspondante.

Selon l'invention, le joint de pourtour 10 respecte la double relation suivante (équation n°01):

$$\tfrac{1}{2}\ D2 \geq D3\ ;$$

et

$$\tfrac{1}{2}\ D2 \geq D4$$

Dans cette équation n°01, et comme illustré notamment à la figure 6 :

- « D2 » désigne une demi-dimension maximale d'élévation (mesurée suivant la direction Z) du joint de pourtour 10. Typiquement, cette demi-dimension maximale d'élévation D2 est étendue depuis un centre d'inertie 37 (voir figures 8, 9, 14) de ce joint 10, jusqu'au sommet supérieur (ou inférieur) des ailes de confinement 17-18 ; 19-20 bordant une même rainure de réception 15 (supérieure) ou 16 (inférieure) ;

- « D4 » désigne une demi-dimension maximale transversale du joint de pourtour 10, mesurée suivant la direction Y. Cette dimension D4 est étendue depuis un plan médian XZ qui divise une rainure de réception soit 15 (supérieure) soit 16 (inférieure) en deux parties égales et de symétrie verticale, jusqu'à l'emplacement d'élévation distal soit intérieur soit extérieur, de l'une au moins des ailes de confinement soit supérieures (17-18) soit inférieures (19-20) ; et

- « D3 » désigne une demi-dimension D3 hors logement d'insertion en élévation de ce joint de pourtour 10. La demi-dimension D3 hors logement est étendue entre une extrémité distale (ou sommet) soit supérieure soit inférieure d'une aile de confinement 17-18 ; 19-20 correspondante, qui est opposée en élévation (Z) au tronc central 13, et une extrémité distale (inversement à celle de l'aile correspondante, i.e. soit inférieure soit supérieure) d'une arête saillante (respectivement 23-24 ; 25-26) formée par cette aile de confinement (17-18 ; 19-20). L'extrémité distale de chaque arête saillante (23-24 ou 25-26) forme le rebord de limite soit inférieure soit supérieure des logements d'insertion 21 et 22.

Encore une autre particularité de l'invention est que le joint de pourtour 10 respecte une autre relation (équation n°02), à savoir:

$$D2 \geq D5.$$

Dans cette équation n°02, et comme illustré notamment à la figure 6, « D5 » désigne une dimension maximale en élévation d'une rainure de réception 15 ou 16. La dimension D5 est mesurée depuis le fond d'une rainure de réception soit 15 supérieure soit 16 inférieure, jusqu'à une extrémité distale (ou sommet) soit supérieure soit inférieure d'une aile de confinement 17-18 ; 19-20 correspondante, qui est opposée en élévation (Z) au tronc central 13.
Selon une réalisation de l'invention, cette dimension D5 est prédéterminée pour être supérieure de sensiblement 5% à 10% de la valeur dimensionnelle de D2, à une distance ou dimension minimale en élévation [P1-P2] d'un logement d'insertion soit intérieur 21 soit extérieur 22, entre les deux arêtes saillantes (respectivement 23, 25 ou 24, 26) de ce logement d'insertion 21 ou 22.
Selon cette réalisation (figure 6), une distance minimale du tronc central 13, c'est-à-dire une dimension D1 minimale de pliage dudit tronc central 13, est localisée entre une section de butée (33-36) d'un des logements d'insertion 21, et une surface de fond 38 d'une rainure de réception 15 ou 16.
Dans cet exemple, la valeur (e.g. en mm) de la dimension D1 est prédéterminée par rapport à la plus étroite transversalement des rainures de réception (inférieure 16 ou supérieure 15), et de sorte que cette dimension D1 soit au plus égale à une dimension D6 transversale de ladite surface de fond 38. Dans d'autres réalisations, la valeur (e.g. en mm) de la dimension D1 est prédéterminée par rapport à la plus large transversalement des rainures 15 et 16 -voire des deux si les deux rainures 15 et 16 ont la même largeur- et de sorte que la dimension D1 soit similairement au plus égale à la dimension transversale D6.
Le cas échéant, la distance minimale D1 est prédéterminée pour être au plus égale à la moitié de l'une des dimensions D6 transversales d'une surface de fond 38 de la rainure de réception (15 ou 16) la plus large transversalement.
On voit par ailleurs sur la figure 6 que le tronc central 13 présente, sensiblement au milieu en élévation (Z) des deux logements d'insertion 21 et 22 intérieur et extérieur (dans certaines réalisations, au milieu d'un seulement de ces deux logements 21 et 22), une gorge de dégagement 39.
Cette gorge de dégagement 39 est étendue longitudinalement (suivant la direction X) d'une extrémité d'embout 14 à l'autre (14) du tronc central 13. Cette gorge de dégagement 39 présente, dans un plan d'élévation transversal YZ, un profil arrondi concave (à convexité tournée vers le centre d'inertie 37 du tronc 13) sensiblement défini par un rayon de courbure R1. En d'autres termes, la gorge de dégagement 39 est en forme de gouttière longitudinale. Ici, la dimension de ce rayon de courbure R1 respecte la relation (équation n°03) :

$$[P3-P4] \geq 3 \times R1,$$

où : [P3-P4] est une distance en élévation entre un point de rebroussement P3 supérieur et un point de rebroussement P4 inférieur d'un logement d'insertion 21 ou 22 soit intérieur soit extérieur. Il s'agit bien sûr d'un logement d'insertion 21, 22 où est disposée une gorge de dégagement 39. De la sorte, en état de libération, les points de rebroussement P3 et P4, respectivement supérieur et inférieur, restent sensiblement distants l'un (P3 ou P4) de l'autre (P4 ou P3) comme ceci ressort sur la figure 7 de la partie intérieure à aile de confinement 19 en position de pliage. Cet espacement prend la forme d'un jour de distanciation 40. On cherche évidemment à minimiser ce jour de distanciation 40.
Autrement dit, on prédétermine la forme du joint de pourtour 10 afin de rendre sensiblement complémentaires en forme, les deux parties repliées en quelque sorte l'une sur l'autre des deux ailes de confinement (17-19 ou 18-20) une fois l'une de ces ailes de confinement (17 ou 19 / 18 ou 20) en position de pliage.

On remarque dans cette même position de pliage (figure 7) que l'arête saillante 25 d'agrafage élastique dudit logement d'insertion 21, est en appui contre la section de butée 33 correspondante, pour ainsi clore (i.e. refermer en son sommet) ledit jour de distanciation 40.

Dans des réalisations, les points de rebroussement P3 et P4 coïncident sensiblement avec l'une des sections de butées (33-36) respectivement inférieure/supérieure et intérieure/extérieure.

Sur la figure 8, on voit quatre renfoncements d'accueil 41-44, à savoir un renfoncement d'accueil 41 intérieur-supérieur, un renfoncement d'accueil 42 intérieur-inférieur, un renfoncement d'accueil 43 extérieur-supérieur et un renfoncement d'accueil 44 extérieur-inférieur.

Suivant cette réalisation, l'arête saillante 23-26 respectivement supérieure ou inférieure, d'un même logement d'insertion 21-22 est de profil externe complémentaire, vu en section d'élévation transversale YZ, avec un renfoncement d'accueil 41-44 respectivement inférieur ou supérieur. Ce renfoncement d'accueil 41-44 du logement d'insertion 21-22 est localisé à l'emplacement de la section de butée 33-36 correspondante, pour éloigner cette dernière (33-36) de ladite arête saillante 23-26. Ainsi, l'invention permet un état de libération dit compact, avec un angle de débattement 31 dit accru, e.g. de 95° à 105°. Il en va sensiblement de même pour l'angle de débattement 31 accru, e.g. de 95° à 105°, montré à la figure 9.

Encore une caractéristique prévoit qu'au moins un matériau constitutif dudit joint de pourtour 10 est choisi parmi (tableau n°01):

| K01 | NF L 17 151 | NFL172505 | NFL17261 | NF L 17 261 |
|---|---|---|---|---|
| K02 | Elastomères Silicones Classe 51 | Caoutchoucs Silicones Classe 50 D 8 | Caoutchoucs fluorosilicones Classe 61 | Caoutchoucs fluorosilicones Classe 61 |
| K03 | 51 A 8 | 50D8 | 61 D 7 | 61 D8 |
| K04 | 80±5 | 80±5 | 70±5 | 80±5 |
| K05 | 5 | 5 | 6 | 5,5 |
| K06 | 60 | 125 | 125 | 120 |
| K07 | / | 40 | 45 | 50 |
| K08 | / | -60 | -55 | -55 |
| K09 | -30°C à +100°C | -55°C à +225°C | -55°C à +180°C | -55°C à +180°C |

où :

- K01 indique la désignation dudit matériau selon une Norme française NF,

- K02 indique la dénomination du Matériau,

- K03 indique un Code dudit matériau,

- K04 indique une valeur de Dureté Shore A dudit matériau,

- K05 indique une valeur de Résistance minimale à la Traction (en MPa) dudit matériau,

- K06 indique une valeur d'Allongement minimal à la rupture (en %) dudit matériau,

- K07 indique une Déformation rémanente après compression (après 70h à 100°C dans l'air, en %) dudit matériau,

- K08 indique une valeur de Température Limite de Non Fragilité (en °C) dudit matériau, et

- K09 indique un intervalle de Températures d'emploi en service prolongé.

Ce matériau constitutif dudit joint de pourtour 10 est approprié pour le joint de pourtour 10 mais aussi pour les clés de maintien 11. Dans des réalisations, le joint de pourtour 10 est une pièce monobloc venue d'injection moulage ou extrusion, et formée en NF L 17 261 61D7, en NF L 17 261 61D8 ou en NF L 17 250 5TBC. Dans des réalisations, le joint de pourtour 10 est un assemblage de plusieurs pièces venues d'injection moulage ou d'extrusion, dont certaines (e.g. deux joncs 45-46 assemblés pour former une cavité de coeur 47) sont formées en NF L 17 261 61D7, en NF L 17 261 61 D8 ou en NF L 17 250 5TBC. Dans les cas (figure 13) où une clé de maintien est pourvue d'un élément rigide en lame 48, celui-ci est en général réalisé à partir d'autres matériaux plus rigides.

Sur les figures 6-10, 12 et 14, le joint de pourtour 10 est en effet une pièce monobloc, venue de moulage injection et / ou dont le matériau comporte un caoutchouc silicone de Classe supérieure à 50 selon une Norme Française NF, par exemple ledit matériau est celui désigné par NFL17.250-5 ou NFL17.261.

Sur la figure 10, la clé de maintien 11 extérieure est réalisée par surmoulage direct sur un élément rigide 48 formant lame, d'une matière synthétique. On obtient ainsi la formation d'une clé de maintien 11 sans section d'accueil 47 ou 49.

Pour une clé de maintien 11 en plusieurs constituants assemblés, comme à la figure 11, il est possible qu'au moins l'un de ses constituants (45 et / ou 46) soit également réalisé par surmoulage direct sur un élément rigide 48 formant lame

Selon des réalisations de l'invention, l'encadrement étanche 32 est dimensionné et calculé pour un type prédéterminé de panneau largable 5 depuis une baie 8 de cloisonnement 2 de véhicule 1.

Cet encadrement étanche 32 est d'enveloppe générale sensiblement prismatique. Sa forme est principalement allongée suivant la direction longitudinale X, pour former les deux faces d'embouts 14. Cet encadrement étanche 32 est également adaptable par conformation longitudinale, à divers profils d'ouverture interne de baies 8 de destination.

Sur les figures 6 à 10, les réalisations illustrées prévoient que le joint de pourtour 10 est sensiblement symétrique par rapport à un plan médian d'élévation longitudinale YZ.

On remarque que ce joint de pourtour 10 est aussi sensiblement symétrique par rapport à un plan médian transversal longitudinal XY. Ici, chacune de deux clés de maintien 11 respectivement, intérieure et extérieure, présente un profil sensiblement complémentaire à celui du logement d'insertion 21-22 correspondant, par exemple avec un profil symétrique par rapport audit plan médian transversal longitudinal XY. On note que ces deux clés de maintien 11 sont, tout comme le joint de pourtour 10, chacune une pièce monobloc.

Sur les figures 7 à 13, le profil sensiblement complémentaire du logement d'insertion 21-22 et donc de chacune des clés de maintien 11 est, dans le plan d'élévation transversale YZ (celui des feuilles), comparable à un « T ».

Le pied (transversal) de ce « T » est dessiné par la gorge de dégagement 39 ou par la forme convexe correspondante de la clé 11, tandis que la barre (en élévation) de ce « T » est dessinée par des parties distales (à fleur l'une avec l'autre) des ailes 17-19 intérieures ou 18-20 extérieures ou par la partie distale (opposée à la gorge de dégagement 39) de chacune des clés de maintien 11.

Par ailleurs, notamment dans ces réalisations, des systèmes d'extraction de clés de type conventionnels (sangle 12 ou analogues), par exemple comparables à ceux des figures 3-5, sont adaptables à l'invention.

Par contre, dans la réalisation de la figure 12, on montre un encadrement étanche 32 où le joint de pourtour 10 est sensiblement asymétrique par rapport au plan médian d'élévation longitudinale XZ et par rapport à un plan médian transversal longitudinal XY. Dans cet exemple, le joint de pourtour 10 est asymétrique (renversé verticalement) et formé avec un logement d'insertion intérieur 21 où une arête saillante 23 supérieure est plus rapprochée que l'arête saillante 25 inférieure de ce même logement d'insertion 21 intérieur.

Ici également, le logement d'insertion 22 extérieur présente une arête saillante 26 inférieure plus rapprochée que l'arête saillante 24 inférieure de ce même logement d'insertion 22.

Ainsi, les deux clés de maintien 11 respectivement intérieure et extérieure, sont de profils sensiblement complémentaires (tête-bêche) à ces logements d'insertion 21-22 correspondants. Typiquement, ces deux clés de maintien 11 asymétriques ont un profil d'élévation transversale (YZ) pour la clé 11 intérieure (logement 21) en ogive à forte convexité inférieure et pour la clé 11 extérieure (logement 22) en ogive à forte convexité supérieure.

On voit sur les figures 6-10 que dans un encadrement étanche 32, une voire les deux clés de maintien 11 sont chacune une pièce monobloc venue de moulage injection et typiquement dont le matériau présente une valeur de Dureté Shore A dudit matériau supérieure à 70 voire 80 selon une Norme Française NF, par exemple ledit matériau est celui désigné par NFL17.250-5 ou NFL17.261.

Sur les figures 11 et 13, dans un encadrement étanche 32, une voire les deux clés de maintien 11 ont chacune deux joncs 45-46 l'un distal et l'autre proximal, et assemblés pour former une cavité de coeur 47. Les deux joncs distal 45 et proximal 46 sont assemblés par agrafage élastique, l'un sur l'autre. Dans cette réalisation, une prise d'extraction 50 est prévue pour d'abord désolidariser les deux joncs distal 45 et proximal 46, et ensuite détacher toute la clé de maintien 11 de son logement d'insertion 21-22.

Sur la figure 13, la clé de maintien 11 qui comporte une cavité de coeur concave 47, est telle que dans cette cavité de coeur 47 est disposé un élément rigide 48. Dans des réalisations, les deux clés 11 d'un encadrement étanche 32 sont ainsi formées. Il existe aussi des éléments rigides 48 en plusieurs constituants, par exemple en deux ou trois parties toutes disposées dans la cavité de coeur 47.

Dans cet exemple (figure 13), l'élément rigide 48 est en forme de lame et est intégré dans la cavité de coeur 47, sensiblement d'une face d'embout 14 à l'autre (14) de l'encadrement étanche 32.

On a vu qu'une clé de maintien 11 peut posséder dans une cavité de coeur 47 (dite périphérique, c'est-à-dire étendue d'une face d'embout 14 à la face d'embout 14 opposée de l'encadrement étanche 32), plusieurs éléments rigides 48 dont certains (voir figure 13, à l'intérieur du jonc distal 45) disposés dans une ou des sections d'accueil, comme celle désignée en 49, distinctes de cette cavité de coeur 47.

En imaginant l'encadrement étanche 32 dans le plan de pose, c'est-à-dire suivant le plan général de la baie 8, de telles sections d'accueil 49 sont réparties sur sa périphérie. Par exemple, on a illustré sur la figure 2 des sections d'accueil 49 agencées dans des tronçons sensiblement rectilignes du coeur concave 47, tandis que des tronçons curvilignes 51, correspondant typiquement à des coins de panneau largable 5, sont dénués d'élément rigide 48.

Notamment, au moins un des tronçons curvilignes de la cavité de coeur 47 coïncide avec une zone d'amorce 52 (figure 2) de largage de hublot.

Sur la figure 13, la réalisation d'assemblage multi-constituants formant une clé de maintien 11 « rigidifiée » est prévue pour un encadrement étanche 32 selon l'invention. Cette clé est généralement similaire à celle de la figure 11 mais comporte un jonc distal 45 à moyens d'accrochage et un jonc proximal 46 à moyens d'accrochage complémentaires à ceux du jonc distal 45.

Cette clé de maintien 11 comporte en outre un élément 48 formant lame de raidissement, ici en métal tel qu'aluminium et / ou en matériau composite tel que fibres de carbone et liant et / ou en matière plastique telle que polycarbonate. Cet élément 48 est logé dans la cavité de coeur 47 longitudinale interne délimitée par les joncs 45-46 et entre ceux-ci.

Tout comme d'autres modes de réalisation, la clé de maintien 11 de la figure 13 présente un profil général, vu en élévation transversale (YZ), comparable à un « T » dont la barre transversale est étendue sensiblement suivant la direction d'élévation Z.

Au sein d'un encadrement étanche 32 selon l'invention, il est possible d'interchanger les divers modèles et formes de clé de maintien 11, et de joint de pourtour 10 les uns avec les autres. Ainsi, la clé de maintien 11 de la figure 13 ou celle de la figure 11 peut indifféremment être montée dans un logement d'insertion (21 ou 22) d'un joint de pourtour 10 réalisé selon l'une des figures 6-10 ou 14.

L'invention permet d'augmenter l'angle de débattement 31 de déformation de l'aile de confinement (17-20), libérant ainsi totalement le passage prévu pour le panneau 5 ce qui se traduit par une diminution significative de l'effort d'éjection, sans diminuer la tenue de ce panneau 5 sous les efforts aérodynamiques en fonctionnement du véhicule 1 (e.g. en vol pour un aéronef), et sous la totalité des plage de température. L'invention permet ainsi de garantir un comportement constant de l'encadrement étanche 32 sur une plage de température allant de -40°C à +55°C.

Pour obtenir un effort constant de largage sur l'enveloppe de température -40° à +55°C, l'invention utilise pour la fabrication de l'encadrement étanche 32, des élastomères e.g. silicone à la place des produits de type « caoutchouc » utilisés dans les techniques connues. Pour le joint de pourtour connu, des matières selon NF31 B7 ou un Néoprène 370 ont été employées, tandis que pour une clé de maintien de type connu, on a classiquement une matière selon NF80G.

Cet élastomère adéquat pour l'invention est choisi pour présenter une dureté Shore de 60 à 90 (Unités Shore A). Pour compenser une perte potentielle de raideur de l'encadrement étanche 32 selon l'invention, maintenant en élastomère silicone - par rapport au « caoutchouc » de l'art antérieur, diverses solutions sont proposées pour une géométrie donnée de l'invention :

- Utiliser un élastomère silicone de dureté supérieure, et/ou
- Augmenter les profondeurs des rainures de réception 15-16 (recevant d'un côté le cloisonnement 2, de l'autre le panneau 5 e.g. un hublot), ceci afin d'augmenter les recouvrements, tout en épaississant cet encadrement étanche 32 et en augmentant la raideur.

Pour mémoire, l'invention permet une diminution de l'effort de largage. Pour obtenir un effort de largage réduit à 24,95 daN, la définition de l'invention retarde le plus possible le moment où l'aile de confinement 17-20 déformée/ mobile vient en contact avec l'aile de confinement 17-20 opposée/fixe et augmente significativement l'angle de débattement 31 formé par cette l'aile de confinement 17-20 déformée par rapport à sa position initiale (en état de fonctionnement normal).

On a exposé ci-dessus la géométrie spécifique du nouveau joint de pourtour 10, et donc celle de l'encadrement étanche 32 selon l'invention. Divers critères propres à l'invention distinguent celle-ci des techniques antérieures.

L'un de ces critères consiste à avoir un angle de débattement 31 dit « rabat » de l'aile de confinement (17-20) dite « lèvre mobile » et plaquée contre le panneau 5 ou hublot) sur l'aile de confinement (17-20) dite « lèvre fixe » et plaquée contre le cloisonnement 2 ou fuselage 3) qui soit suffisant pour laisser le passage libre au panneau 5 lors de son éjection ou largage.

Ceci se concrétise notamment par un angle de débattement 31 possible assurant une rotation de l'aile de confinement (17-20) de plus de 90°. Ainsi, cette aile de confinement (17-20) est totalement effacée du chemin de passage du panneau 5 au largage. Simultanément, l'encadrement étanche 32 en état de libération n'applique plus de retenue transversalement (Y) entre le panneau 5 et le cloisonnement 2.

L'invention parvient à cela, en prévoyant que la dimension D3 et la dimension D4 soient inférieures ou égales à ½ D2, en évitant que les arêtes saillantes (23-26) ou ergots en vis-à-vis, ne se rencontrent avant que l'angle de débattement 31 n'atteigne 90°.

Un autre critère est, en comparaison avec les techniques connues, « l'élargissement » de la clé de maintien 11, c'est-à-dire l'accroissement proportionnel de la dimension maximale d'élévation (Z) de cette clé 11 et donc du logement d'insertion 21-22 qui la reçoit. Ce critère permet d'écarter l'une de l'autre les arêtes saillantes (23-26), ou ergots, pour augmenter l'ouverture de l'angle de débattement 31 lors du retrait de la clé 11 hors de son logement 21-22, ce qui améliore également la tenue du panneau 5 sur le cloisonnement 2 en état de fonctionnement normal i.e. « en condition statique ».

En choisissant d'augmenter la dimension ou profondeur D5 des rainures ou gorges, la dimension D2 se trouve augmentée, et la condition « D4 < ½ D2 » est respectée.

La dimension D1 doit être minimisée pour donner de la souplesse à la zone dite épaulement de pliage (27-30) déformée et pour permettre le rabat de l'aile de confinement (17-20) mobile, mais pas exagérément afin d'éviter que le joint de pourtour 10 ne se déchire sous les efforts aérodynamiques en état de fonctionnement normal.

Le rayon de courbure R1 de la gorge de dégagement 39 est augmenté afin d'éloigner l'espacement en élévation des arêtes saillantes (23-26) en vis-à-vis et donc la distance [P3-P4]. Ceci notamment permet le mouvement de l'aile de confinement (17-20) mobile, sous peine que les arêtes saillantes (23-26) en vis-à-vis ne se rencontrent avant que l'aile de confinement (17-20) mobile n'ait parcouru sa course de 90° minimum.

Le fonctionnement au largage de l'encadrement étanche 32 selon l'invention, c'est-à-dire le passage de l'état normal de fonctionnement à l'état de libération, est décrit ci-après. Indifféremment, les encadrements étanches 32 des réalisations illustrées de l'invention permettent au choix, soit un largage de l'intérieur vers l'extérieur du véhicule 1 en poussant transversalement de gauche à droite sur le panneau amovible 5, soit un largage de l'extérieur vers l'intérieur en poussant de droite à gauche sur ce panneau 5. Pour un largage depuis l'intérieur du véhicule 1, c'est une aile de confinement (17-19) intérieure qui est déplacée de l'angle de débattement 31. A l'inverse, pour un largage depuis l'extérieur du véhicule 1, c'est une aile de confinement (17-19) extérieure qui est déplacée de l'angle de débattement 31.

Sur les figures 6-14, les spécificités dont le dimensionnement des constituants de l'invention autorisent à la fois une ouverture de l'angle de débattement 31 plus importante qu'avec les techniques connues, en permettant de pousser le panneau 5 avec un effort moindre (tout en restant dans la plage d'efforts préconisée par les instances de certification). Remarquons que ce principe de largage et de déformation est symétrique (sauf sur la figure 12) dans le cas largage de l'extérieur vers l'intérieur en poussant sur le panneau 5.

On peut aussi grâce à l'invention, procéder à un largage de l'extérieur vers l'extérieur, en tirant sur le panneau : un tel cas peut s'appliquer par exemple à un hublot d'hélicoptère tel qu'un modèle Eurocopter EC225 ou EC155B1-VIP.

Dans la prédétermination des réalisations de l'invention, un pré-dimensionnement permet de relever les valeurs suivantes (tableau n°02):

| MODELE | EFFORT (N) | D5 (mm) | Déformée Ux (mm) | RAIDEUR K (N/mm) | GAIN Ux Max (%) | GAIN k (%) Assemblage |
|--------|------------|---------|------------------|------------------|-----------------|-----------------------|
| TEST 03 | 2,5 | 13,8 | 4,26 | 0,587 | 13,9 | + 16,2 |

En augmentant la profondeur de gorge D5 alors la déformée hors plan notée « Ux » diminue ce qui traduit une raideur accrue de l'assemblage et ainsi une meilleur tenue de l'assemblage sous charge. Cette nouvelle géométrie permet l'augmentation de la profondeur de la rainure de réception (15 ou 16), la géométrie calculée ici présente ainsi un gain de raideur de l'assemblage de l'ordre de 16% (Noté « Gain k» et indiqué en pourcentage -%- de la Raideur « K ») dans l'exemple d'une augmentation de la profondeur (D5) de le rainure de réception (15 ou 16) de l'ordre de 72%.On peut conclure que sous un effort de chargement identique, l'invention parvient à augmenter la raideur de l'encadrement étanche 32. La tenue de cet encadrement étanche 32 est donc non seulement équivalente à celle des joints de largage actuels, mais nettement supérieure.

Pour les principales propriétés des matériaux des clés 11 ou joints 10, il est courant dans les techniques actuelles d'employer un matériau NF L 17 131.

Ainsi, dans le tableau n°01, les matériaux listés indiquent une tendance des caractéristiques matériaux pressentis pour la définition finale de l'encadrement étanche 32 selon l'invention. La nuance exacte et finale de matériau sera sélectionnée en pratique, selon des exigences de fabrication propres.

L'invention est totalement interchangeable avec les joints de largage actuels. Ainsi l'invention permet par changement après vente dit « Retrofit », d'améliorer le niveau de sécurité requis pour les véhicules 1 en service, notamment des hélicoptères.

Selon une variante de l'invention, par changement du matériau des clés 11, l'augmentation de leur indice de dureté permet d'augmenter la charge admissible du joint de pourtour 10. Cette variante permet d'améliorer la résistance du montage du panneau 5 dans joint de pourtour 10 sur un cloisonnement 2, sous l'effet de la pression (ou dépression) aérodynamique.

Selon une variante de l'invention (figure 13), pour améliorer la charge admissible de l'ensemble de l'encadrement étanche 32, l'augmentation de la rigidité de la clé de maintien 11, au-delà des raideurs atteignables par la modification simple du matériau constituant celle-ci, est possible en intégrant au moins un élément 48 rigide / une pièce rigide supplémentaire dans le corps de la clé 11. Sur la figure 13, la clé de maintien 11 est divisée en plusieurs constituants, entre lesquels l'élément rigide 48 est interposé.

Ce type d'élément rigide 48 interposé entre les deux joncs 45 distal et 46 proximal de la clé 11, est selon les réalisations en aluminium et / ou en composite (fibre de verre ou fibre de carbone) et / ou en polycarbonate.

Selon les réalisations, un élément rigide 48 fait le tour complet de la clé de maintien 11 et donc du panneau amovible 5.

Dans d'autres réalisations, plusieurs éléments rigides 48 sont intégrés à la clé de maintien 11 de manière à être répartis et donc apporter une rigidification dédiée à des emplacements privilégiés. Ainsi les zones courantes telles que certains angles ou rayons de la clé de maintien 11 sont rigidifiées du fait que ces zones accueillent des éléments rigides 48. D'autres zones, dénuées de tels éléments rigides 48, sont dans certaines réalisations employées pour amorcer le largage du panneau 5, ce qui contribue à augmenter la rigidité du montage et donc augmenter sa tenue sous l'effet des chargements aérodynamiques. Les rayons dans les angles du panneau 5 utilisés pour amorcer le largage restent libres de tout élément rigide 48. Quelle que soit la solution retenue, le ou les éléments rigides 48 doivent être détourés de manière appropriée à la géométrie de chaque panneau 5.

Pour améliorer la charge admissible de l'ensemble de l'encadrement étanche 32, en jouant sur celle de la clé 11, et pour atteindre des raideurs au-delà de celles qui sont atteignables par le seul changement de matériau constituant, il est possible d'intégrer un ou plusieurs éléments rigides, en les réalisant in situ par injection ou coulée directe d'un mastic et / ou de colle à l'intérieur de la cavité de coeur 47.

Selon les réalisations, l'ensemble de cette cavité de coeur 47 est remplie par un élément rigide 48 unique, ou des espaces sans élément rigide 48 sont réservés dans la cavité de coeur 47 entre au moins deux embouts d'éléments rigides 48 ou entre des éléments rigides 48.

Dans des réalisations, un ou plusieurs éléments rigides 48 insérés dans la clé de maintien 11 sont au moins en partie en aluminium et / ou en matériau composite (e.g. fibre de verre ou fibre de carbone) et / ou en polycarbonate.

Quelle que soit la solution choisie, un encadrement étanche 32 comporte soit un élément rigide 48 unique, e.g. faisant le tour complet du panneau 5, soit une répartition de plusieurs éléments rigides 48 à des emplacements privilégiés du pourtour de la cavité de coeur 47. Une réalisation prévoit dans le jonc distal 45, une autre section d'accueil distincte 49. Une telle section 49 reçoit également un ou plusieurs éléments rigides 48 à un ou plusieurs emplacements privilégiés de son pourtour.

Dans des réalisations, après leur insertion dans la clé de maintien 11 puis leur scellement après injection ou coulée d'un mastic ou d'une colle, chaque clé de maintien 11 est préformée au profil du panneau 5 de destination, ce qui facilitera l'installation.

Les rayons dans les angles du panneau 5 utilisés pour amorcer son largage restent libres de tout élément rigide 48. Les rayons restent tous libres de tout élément rigide 48 dans des réalisations où l'on désire que l'encadrement étanche 32 soit spécialement flexible notamment afin de faciliter le montage des clés de maintien 11 dans leur joint de pourtour 10 de destination.

Dans la variante de la figure 14 le joint de pourtour 10 présente des arêtes en saillie (23-26) dites « lèvres » particulièrement longues de chaque côté des logements d'insertion 21-22 recevant les clés de maintien 11. Ceci permet d'améliorer la tenue des clés de maintien 11 dans le joint 10 une fois mises en place. En revanche l'installation des clés 11 peut s'en trouver plus difficile.

Sur la figure 14, on comprend qu'en état de libération (selon l'aile de confinement 17-20 qui est mobilisée) :

- l'arête saillante 23 (intérieure/supérieure) vient se loger dans le renfoncement d'accueil 42 (intérieur/inférieur),

- l'arête saillante 24 (extérieure/supérieure) vient se loger dans le renfoncement d'accueil 44 (extérieur/inférieur),

- l'arête saillante 25 (intérieure/inférieure) vient se loger dans le renfoncement d'accueil 41 (intérieur/supérieur),

- l'arête saillante 26 (extérieure/inférieure) vient se loger dans le renfoncement d'accueil 43 (extérieur/supérieur).

En se logeant ainsi dans les renfoncements d'accueils 41-44, il est aisé à l'invention d'assurer les 90° de rotation minimum de l'aile de confinement 17-20 mobile lors du largage du panneau 5.

Des avantages de l'invention son évoqués.

Grâce à l'invention, il est aisé de résoudre le problème de certification rencontré parfois avec certaines solutions existantes, qui nécessitent l'application d'efforts supérieurs à 24,95 daN à température ambiante (entre 20°C et 30°C). Dans des cas de la technique antérieure, des efforts sont parfois supérieurs à 80 daN à basse température.

L'invention permet de dé-corréler la fonction et l'effort de largage de la composition et la raideur du panneau 5.

Un encadrement étanche 32 selon l'invention est totalement interchangeable avec les joints de largage connus. Ainsi cette invention permet d'établir un niveau de sécurité amélioré pour les véhicules 1 déjà en service.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un constituant décrit par un moyen équivalent sans sortir du cadre de la présente invention.

**Revendications**

1.  Encadrement étanche (32) pour un panneau amovible (5) depuis une baie (8) de cloisonnement (2) d'un aéronef (1), cet encadrement étanche (32) étant sensiblement prismatique, principalement allongé suivant une direction longitudinale (X) pour former deux faces d'embouts et étant adaptable par conformation longitudinale à un profil d'ouverture interne de la baie (8) de destination, cet encadrement étanche (32) possédant au moins un joint de pourtour (10) étant de type généralement tubulaire et comportant au moins : un tronc central (13) de forme sensiblement prismatique, principalement allongée suivant la direction longitudinale (X) pour former deux extrémités d'embout (14), ce joint de pourtour (10) étant adaptable par conformation longitudinale à un profil d'ouverture interne de la baie (8), une rainure de réception supérieure (15) et une rainure de réception inférieure (16), étendues d'une extrémité d'embout (14) à l'autre du tronc central, sensiblement suivant un plan d'élévation longitudinal (XZ) médian; respectivement de part et d'autre transversalement de la rainure de réception supérieure (15), une aile de confinement supérieure intérieure (17) et une aile de confinement supérieure extérieure (18), ainsi que de part et d'autre transversalement de la rainure de réception inférieure (16) une aile de confinement inférieure intérieure (19) et une aile de confinement inférieure extérieure (20), délimité entre l'aile de confinement supérieure intérieure (17) et l'aile de confinement inférieure intérieure (19), un logement d'insertion (21) intérieur pour une clé de maintien (11) intérieure et délimité entre l'aile de confinement supérieure extérieure (18) et l'aile de confinement inférieure extérieure (20), un logement d'insertion (22) extérieur pour une clé de maintien (11) extérieure, sur chaque aile de confinement (17-20), une arête saillante (23-26) d'agrafage élastique pour l'une des clés de maintien (11), étendue sensiblement en élévation longitudinalement, ces arêtes saillantes (23-26) étant en regard deux à deux en élévation de part et d'autre respectivement de l'un des logements d'insertion (21-22); et reliant chacune des quatre ailes de confinement (17-20) au tronc central (13), respectivement un épaulement de pliage (27-30) longitudinal, **caractérisé en ce que** ce joint de pourtour (10) prévoit un angle de débattement (31) d'au moins 90° dans un plan (YZ) perpendiculaire à la direction longitudinale (X), d'au moins une aile de confinement (17-20) par déformation de l'épaulement de pliage (27-30) correspondant vers une concavité du logement d'insertion (21-22) correspondant, depuis un état de fonctionnement normal jusqu'à un état de libération du panneau amovible (5), en état de libération, l'arête saillante (23-26) de l'aile de confinement (17-20) pliée étant en appui contre une section de butée (33-36) du logement d'insertion (21-22) correspondant, section de butée (33-36) située sensiblement entre le tronc central (13) et l'aile de confinement (17-20) identiquement intérieure ou extérieure qui est opposée à l'aile de confinement (17-20) rabattue ; au moins une clé de maintien (11) comportant une cavité de coeur (47) concave dans laquelle est disposé au moins un élément rigide (48) en forme de lame ou analogue, cet élément rigide (48) étant intégré dans la cavité de coeur (47) de ladite clé de maintien (11), sensiblement d'une extrémité d'embout (14) à l'autre extrémité (14) de cet encadrement étanche (32).

2.  Encadrement étanche (32) selon la revendication 1, **caractérisé en ce que** ce joint de pourtour (10) respecte une relation reliant une demi-dimension D2 maximale d'élévation du joint de pourtour (10), une demi-dimension D4 maximale transversale du joint de pourtour (10) et une demi-dimension D3 hors logement d'insertion (21-22) en élévation de ce joint de pourtour (10), la demi-dimension D3 hors logement étant étendue entre une extrémité distale soit supérieure soit inférieure d'une aile de confinement (17-20) correspondante qui est opposée en élévation au tronc central (13) et une extrémité distale d'une arête saillante (23-26) formée par cette aile de confinement (17-20), cette relation entre demi-dimension D2 d'élévation, demi-dimension D4 transversale et demi-dimension D3 hors logement étant telle que : $\frac{1}{2} D2 \geq D3$ et $\frac{1}{2} D2 \geq D4$.

**3.** Encadrement étanche (32) selon la revendication 1 ou 2, **caractérisé en ce que** le joint de pourtour (10) respecte une relation telle que :

$$D2 \geq D5 \;;$$

où D2 est une demi-dimension maximale d'élévation du joint de pourtour (10) et D5 est la dimension maximale en élévation d'une rainure de réception (15-16), cette dimension D5 étant supérieure de sensiblement 5 à 10% de D2, à une distance [P1-P2] ou dimension minimale en élévation d'un logement d'insertion (21-22), entre les deux arêtes saillantes (23-26) de ce logement d'insertion (21-22).

**4.** Encadrement étanche (32) selon l'une des revendications 1 à 3, **caractérisé en ce qu'**une distance minimale D1 du tronc central (13), entre une section de butée (33-36) du logement d'insertion (21-22) et une surface de fond (38) de la rainure de réception (15-16) la plus étroite transversalement, soit inférieure soit supérieure, est au plus égale à une dimension D6 transversale de ladite surface de fond (38) et / ou la distance minimale D1 est au plus égale à la moitié d'une dimension D6 transversale d'une surface de fond (38) de l'autre rainure de réception (16-15), respectivement soit supérieure soit inférieure, la plus large transversalement et opposée en élévation à la rainure de réception (15-16) la plus étroite.

**5.** Encadrement étanche (32) selon l'une des revendications 1 à 4, **caractérisé en ce que** le tronc central (13) présente, sensiblement au milieu en élévation d'au moins un logement d'insertion (21-22) soit intérieur soit extérieur, une gorge de dégagement (39), étendue longitudinalement d'une extrémité d'embout (14) à l'autre du tronc central (13), cette gorge de dégagement (39) présentant dans un plan d'élévation transversal (YZ), un profil arrondi concave sensiblement défini par un rayon de courbure R1 ; la dimension de ce rayon de courbure R1 respectant la relation : [P3-P4] $\geq$ 3 x R1, où : [P3-P4] est une distance en élévation entre un point de rebroussement P3 supérieur et un point de rebroussement P4 inférieur d'un logement d'insertion (21-22) soit intérieur soit extérieur, logement d'insertion (21-22) où est disposée ladite gorge de dégagement (39), de sorte qu'en état de libération les points de rebroussement, respectivement supérieur et inférieur, restent sensiblement distants l'un de l'autre tandis que l'arête saillante (23-26) d'agrafage élastique dudit logement d'insertion (21-22) est en appui contre la section de butée (33-36) correspondante.

**6.** Encadrement étanche (32) selon l'une des revendications 1 à 5, **caractérisé en ce qu'**au moins une arête saillante (23-26) respectivement supérieure ou inférieure, d'un même logement d'insertion (21-22) est de profil externe complémentaire, vu en section d'élévation transversale, avec un renfoncement d'accueil (41-44) respectivement inférieur ou supérieur, ce renfoncement d'accueil (41-44) du logement d'insertion (21-22) étant localisé à l'emplacement de la section de butée (33-36) correspondante, pour éloigner cette section de butée (33-36) de ladite arête saillante (23-26) et ainsi permettre par un état de libération dit compact, un angle de débattement (31) dit accru, e.g. de 95° à 105°.

**7.** Encadrement étanche (32) selon l'une des revendications 1 à 6, **caractérisé en ce que** ce joint de pourtour (10) est une pièce monobloc, venue de moulage injection et / ou extrusion, dont le matériau comporte un caoutchouc silicone de Classe supérieure à 50 selon une Norme Française NF, par exemple ledit matériau étant désigné par NFL7.250-5 ou NFL17.261.

**8.** Encadrement étanche (32) selon la revendication 1, **caractérisé en ce qu'**au moins un matériau constitutif dudit joint de pourtour (10) et / ou de la la clé de maintien (11) est choisi parmi (tableau n°01):

| K01 | NF L 17 151 | NF L 17 2505 | NF L 17 261 | NF L 17 261 |
|---|---|---|---|---|
| K02 | Elastomères Silicones Classe 51 | Caoutchoucs Silicones Classe 50 D 8 | Caoutchoucs fluorosilicones Classe 61 | Caoutchoucs fluorosilicones Classe 61 |
| K03 | 51 A8 | 50 D 8 | 61 D 7 | 61 D 8 |
| K04 | 80±5 | 80±5 | 70±5 | 80±5 |
| K05 | 5 | 5 | 6 | 5,5 |
| K06 | 60 | 125 | 125 | 120 |

(suite)

| K07 | / | 40 | 45 | 50 |
|-----|---|----|----|----|
| K08 | / | -60 | -55 | -55 |
| K09 | -30°C à +100°C | -55°C à +225°C | -55°C à +180°C | -55°C à +180°C |

où :

- K01 indique la désignation dudit selon une Norme française NF,
- K02 indique la dénomination du Matériau,
- K03 indique un Code dudit matériau,
- K04 indique une valeur de Dureté Shore A dudit matériau,
- K05 indique une valeur de Résistance minimale à la Traction (en MPa) dudit matériau,
- K06 indique une valeur d'Allongement minimal à la rupture (en %) dudit matériau,
- K07 indique une Déformation rémanente après compression (après 70h à 100°C dans l'air, en %) dudit matériau,
- K08 indique une valeur de Température Limite de Non Fragilité (en °C) dudit matériau, et
- K09 indique un intervalle de Températures d'emploi en service prolongé.

**9.** Encadrement étanche (32) selon la revendication 1, **caractérisé en ce que** le joint de pourtour (10) est sensiblement symétrique par rapport à un plan médian d'élévation longitudinale, voire par rapport à un plan transversal longitudinal, chacune de deux clés de maintien (11) respectivement, intérieure et extérieure, présentant un profil sensiblement complémentaire à celui du logement d'insertion (21-22) correspondant, par exemple avec un profil symétrique par rapport audit plan transversal longitudinal.

**10.** Encadrement étanche (32) selon la revendication 1, **caractérisé en ce qu'**au moins le joint de pourtour (10) est sensiblement asymétrique par rapport à un plan médian d'élévation longitudinale et / ou par rapport à un plan médian transversal d'élévation.

**11.** Encadrement étanche (32) selon la revendication 10, **caractérisé en ce que** le joint de pourtour (10) asymétrique étant formé avec un logement d'insertion (21) intérieur où une arête saillante supérieure (23) est plus rapprochée que l'arête saillante inférieure (25) de ce même logement d'insertion (21) intérieur ; tandis qu'un logement d'insertion (22) extérieur présente une arête saillante (26) inférieure plus rapprochée que l'arête saillante (24) inférieure de ce même logement d'insertion (22), deux clés de maintien (11 respectivement intérieure et extérieure étant de profil sensiblement complémentaires aux logements d'insertion (21-22) correspondants, typiquement avec un profil d'élévation transversale en ogive à forte convexité respectivement inférieure et supérieure.

**12.** Encadrement étanche (32) selon l'une des revendications 1 à 11, **caractérisé en ce qu'**au moins une clé de maintien (11) est une pièce venue de moulage injection et / ou extrusion dont le matériau présente une valeur de Dureté Shore A dudit matériau supérieure à 70 voire 80 selon une Norme Française NF, par exemple ledit matériau étant celui désigné par NFL17.250-5 ou NFL17.261.

**13.** Encadrement étanche (32) selon l'une des revendications 1 à 12, **caractérisé en ce qu'**au moins une clé de maintien (11) comporte une cavité de coeur (47) concave dans laquelle est disposé au moins un élément rigide (48), par exemple, un élément rigide (48) en forme de lame ou analogue étant intégré dans la cavité de coeur (47) de ladite clé de maintien (11), sensiblement d'une extrémité d'embout (14) à l'autre extrémité (14) de cet encadrement étanche (32).

**14.** Encadrement étanche (32) selon l'une des revendications 1 à 13, **caractérisé en ce qu'**au moins une clé de maintien (11) possède une cavité de coeur (47) concave dite périphérique, étendue d'une extrémité d'embout (14) à l'extrémité d'embout (14) opposée de l'encadrement étanche (32), tandis que plusieurs éléments rigides (48) sont disposés dans des sections d'accueil (49) distinctes de cette cavité de coeur (47), réparties sur sa périphérie ; par exemple, des sections d'accueil (49) étant agencées dans des tronçons sensiblement rectilignes de la clé de maintien (11) tandis que des tronçons curvilignes, typiquement correspondant à des coins de panneau amovible (5), étant dénués d'élément rigide (48), notamment, au moins un des tronçons curvilignes de la cavité de coeur (47) coïncidant avec une zone d'amorce de largage du panneau (5).

**15.** Aéronef (1) pourvu d'au moins un cloisonnement (2) qui définit une baie (8) pour un panneau amovible (5), ce dernier étant relié audit cloisonnement (2) par un encadrement étanche (32) selon l'une des revendications 1 à 13, **caractérisé en ce que** ledit aéronef (1) est à voilure tournante, le cloisonnement (2) étant une partie de fuselage (3) ou de porte, le panneau amovible (5) étant un hublot ou une trappe ou analogue, et l'encadrement étanche (32) étant interchangeable, voire forme un encadrement étanche (32) de substitution d'un encadrement distinct.

**Patentansprüche**

**1.** Dichte Einrahmung (32) für ein aus einer verschließbaren Öffnung (2, 8) eines Luftfahrzeugs (1) abnehmbares Paneel (5), wobei diese dichte Einrahmung (32) eine in etwa prismatische Form hat und sich im Wesentlichen langgestreckt in einer Längsrichtung (X) erstreckt, um zwei Abdeckungsflächen zu bilden, und wobei die dichte Einrahmung sich durch eine Längsanpassung an ein inneres Öffnungsprofil der Öffnung (8) anpassen kann, wobei die dichte Einrahmung (32) mindestens eine Umfangsdichtung (10) aufweist, die allgemein vom rohrförmigen Typ ist und mindestens aufweist: einen zentralen Schaft (13), in etwa in Form eines Prismas, der sich im Wesentlichen längs entlang der Längsrichtung (X) erstreckt, um zwei Abdeckungsenden (14) zu bilden, wobei diese Umfangsdichtung (10) durch eine Längsanpassung an ein inneres Öffnungsprofil der Öffnung (8) anpassbar ist, eine obere Aufnahmenut (15) und eine untere Aufnahmenut (16), die sich von einem Ende der Abdeckung (14) bis zum anderen Ende des zentralen Schafts im Wesentlichen in einer senkrechten Mittellängsebene (XZ) erstrecken, jeweils quer zur einen und anderen Seiten der oberen Aufnahmenut (15), eine obere innere Abdichtungslippe (17) und eine obere äußere Abdichtungslippe (18), sowie quer auf der einen und der anderen Seite der unteren Aufnahmenut (16) eine untere innere Dichtlippe (19) und eine untere äußere Dichtlippe (20), eingegrenzt zwischen der oberen inneren Dichtlippe (17) und der unteren inneren Dichtlippe (19), einen inneren Einfügungssitz (21) für ein inneres Halterungsprofil (11) und eingegrenzt zwischen der oberen äußeren Dichtlippe (18) und der unteren äußeren Dichtlippe (20), einen äußeren Einfügungssitz (22) für ein äußeres Halterungsprofil (11), auf jeder Dichtungslippe (17-20) einen vorstehenden elastischen Klammersteg (23-26) für eines der Halterungsprofile (11), der sich im Wesentlichen in Längsrichtung erstreckt, wobei diese vorstehenden Stege (23-26) sich zu zweit in senkrechter Richtung jeweils gegenüber einem der Einfügungssitze (21-22) gegenüberliegen und jeweils die vier Dichtungslippen (17-20) mit dem zentralen Schaft (13) bzw. mit einer Längsfalzschulter (27-30) verbinden, **dadurch gekennzeichnet, dass** diese Umfangsdichtung (10) einen Schwenkbereichswinkel (31) von mindestens 90° in einer Ebene (YZ) senkrecht zu der Längsrichtung (X) mindestens einer Dichtungslippe (17-20) vorsieht durch Verformung der entsprechenden Falzschulter (27-30) in Richtung auf eine Aushöhlung des entsprechenden Einfügungssitzes (21-22), ausgehend von einem normalen Betriebszustand bis zu einem Zustand, in dem das abnehmbare Paneel (5) abgelöst ist, wobei im abgelöstem Zustand der vorstehende Steg (23-26) der gefalzten Dichtungslippe (17-20) gegen einen Anschlagsbereich (33-36) des entsprechenden Einfügungssitzes (21-22) anliegt, wobei der Anschlagsbereich (33-36) im Wesentlichen zwischen dem zentralen Schaft (13) und der identischen inneren oder äußeren Dichtungslippe (17-20), die gegenüber der gefalzten Dichtungslippe (17-20) liegt, gelegen ist, wobei mindestens ein Halteprofil (11) eine zentrale konkave Ausnehmung (47) aufweist, in der ein steifes Element (48) in Form einer Lamelle oder in entsprechender Form angeordnet ist, wobei dieses steife Element (48) in die zentrale Ausnehmung (47) des Halterungsprofils (11) im Wesentlichen von einem Abdeckungsende (14) bis zum anderen Ende (14) dieser dichten Einrahmung (32) integriert ist.

**2.** Dichte Einrahmung (32) nach Anspruch 1, **dadurch gekennzeichnet, dass** diese Umfangsdichtung (10) eine Beziehung erfüllt, die eine maximale senkrechte Halbabmessung D2 der Umfangsdichtung (10), eine maximale halbe Querabmessung D4 der Umfangsdichtung (10) und eine senkrechte Halbabmessung D3 außerhalb des Einfügungssitzes (21-22) dieser Umfangsdichtung (10) verknüpft, wobei die Halbabmessung D3 außerhalb des Sitzes sich zwischen einem distalen entweder oberen oder unteren Ende einer entsprechenden Dichtungslippe (17-20) erstreckt, die in senkrechter Richtung gegenüber dem zentralen Schaft (13) und einem distalen Ende eines vorstehenden Stegs (23-26) liegt, das durch diese Dichtungslippe (17-22) gebildet wird, wobei die Beziehung zwischen der senkrechten Halbabmessung D2, der Querhalbabmessung D4 und der Halbabmessung D3 außerhalb des Sitzes lautet: % D2 $\geq$ D3 und ½ D2 $\geq$ D4.

**3.** Dichte Einrahmung (32) nach Anspruch 1 oder 2, **dadurch gekennzeichnet, dass** die Umfangsdichtung (10) eine Beziehung erfüllt:

$$D2 \geq D5,$$

wobei D2 eine maximale senkrechte Halbabmessung der Umfangsdichtung (10) ist, und D5 eine maximale senkrechte Abmessung einer Aufnahmenut (15-16) ist, wobei diese Abmessung D5 um 5 bis 10 % von D2 größer ist als ein Abstand [P1-P2] oder eine minimale senkrechte Abmessung eines Einfügungssitzes (21-22) zwischen den beiden vorstehenden Stegen (23-26) dieses Einfügungssitzes (21-22).

4.  Dichte Einrahmung (32) nach einem der Ansprüche 1 bis 3,
    **dadurch gekennzeichnet, dass** ein minimaler Abstand D1 des zentralen Schaftes (13) zwischen einem Anschlagsbereich (33-36) des Einfügungssitzes (21-22) und einer Bodenfläche (38) der Aufnahmenut (15-16), die in Querrichtung am schmalsten ist - wobei die Aufnahmenut die untere oder die obere sein kann - höchstens gleich einer Querabmessung D6 der Bodenfläche (38) ist und/oder der minimale Abstand D1 höchstens gleich der Hälfte einer Querabmessung D6 einer Bodenfläche (38) der anderen Aufnahmenut (16-15) ist, wobei die andere Aufnahmenut die obere oder die untere Aufnahmenut sein kann, und die Aufnahmenut die in Querrichtung breiteste Aufnahmenut ist, die senkrecht gegenüber der schmalsten Aufnahmenut (15-16) liegt.

5.  Dichte Einrahmung (32) nach einem der Ansprüche 1-4,
    **dadurch gekennzeichnet, dass** der zentrale Schaft (13) in etwa senkrecht in der Mitte mindestens einen unteren oder oberen Einfügungssitz (21-22), eine Entlastungsnut (39), die sich längs von einem Abdeckungsende (14) bis zum anderen Ende des zentralen Schaftes (13) erstreckt, aufweist, wobei diese Entlastungsnut (39) in einer senkrechten Querebene (YZ) ein konkav abgerundetes Profil aufweist, das in etwa durch einen Krümmungsradius R1 definiert ist, wobei die Größe des Krümmungsradius R1 folgende Beziehung erfüllt: [P3-P4] $\geq$ 3 x R1, wobei [P3-P4] ein senkrechter Abstand zwischen einem oberen Umkehrpunkt P3 und einem unteren Umkehrpunkt P4 eines inneren oder äußeren Einfügungssitzes (21-22) ist, wo die Entlastungsnut (39) angeordnet ist, derart, dass im abgelösten Zustand die oberen und unteren Umkehrpunkte voneinander beabstandet bleiben, während der vorstehende elastische Klemmsteg (23-26) des Einfügungssitzes (21-22) gegen den entsprechenden Anschlagsbereich (33-36) anliegt.

6.  Dichte Einrahmung (32) nach einem der Ansprüche 1 bis 5,
    **dadurch gekennzeichnet, dass** mindestens ein vorstehender Steg (23-26), entweder ein oberer oder ein unterer Steg eines selben Einfügungssitzes (21-22), im senkrechten Querschnitt gesehen, ein äußeres Profil aufweist, das komplementär zu einer unteren oder oberen Aufnahmevertiefung (41-44) ist, wobei diese Aufnahmevertiefung (41-44) des Einfügungssitzes (21-22) am Ort des entsprechenden Anschlagsbereichs (33-36) ist, um diesen Anschlagsbereich (33-36) von dem vorstehenden Steg (23-26) fernzuhalten und somit durch einen kompakt genannten Ablösezustand einen großen Schwenkbereichswinkel (31) von z.B. 95 bis 105° zu ermöglichen.

7.  Dichte Einrahmung (32) nach einem der Ansprüche 1 bis 6,
    **dadurch gekennzeichnet, dass** die Umfangsdichtung (10) ein einstückiges Teil ist, hergestellt durch Spritzguss und/oder Extrusion, dessen Material einen Siliconkautschuk aufweist einer Klasse größer als 50 nach einer französischen Norm NF, wobei das Material beispielsweise die Bezeichnung NFL 17.250-5 oder NFL 17.261 aufweist.

8.  Dichte Einrahmung (32) nach Anspruch 1,
    **dadurch gekennzeichnet, dass** mindestens ein Material, aus dem die Umfangsdichtung (10) und/oder das Halterungsprofil (11) bestehen, aus der Tabelle (Tabelle Nr. 01) gewählt sind:

| K01 | NF L 17 151 | NF L 17 250 5 | NF L 17 261 | NF L 17 261 |
|-----|-------------|---------------|-------------|-------------|
| K02 | Silicon-Elastomere Klasse 51 | Silicon-Gummis Klasse 50 D8 | Fluorsilicon-Gummis Klasse 61 | Fluorsilicon-Gummis Klasse 61 |
| K03 | 51 A 8 | 50 D 8 | 61 D 7 | 61 D 8 |
| K04 | 80 $\pm$ 5 | 80 $\pm$ 5 | 70 $\pm$ 5 | 80 $\pm$ 5 |
| K05 | 5 | 5 | 6 | 5,5 |
| K06 | 60 | 125 | 125 | 120 |
| K07 | / | 40 | 45 | 50 |
| K08 | / | -60 | -55 | -55 |
| K09 | -30°C bis +100°C | -55°C bis +225°C | -55°C bis +180°C | -55°C bis +180°C |

wobei:

- K01 die Bezeichnung des Materials nach einer französischen Norm NF angibt,
- K02 den Namen des Materials angibt,
- K03 eine Kennziffer des Materials angibt,
- K04 einen Wert der Shore-Härte A des Materials angibt,
- K05 einen Wert der minimalen Zugspannungsbelastbarkeit (in MPa) des Materials angibt,
- K06 einen minimalen Wert der Reißfestigkeit bei einer Streckung (in %) des Materials angibt,
- K07 eine remanente Verformung nach Kompression des Materials (nach 70 h bei 100°C in Luft, in %) angibt,
- K08 einen Grenztemperaturbereich der Unzerbrechlichkeit (in °C) des Materials angibt, und
- K09 einen Betriebstemperaturbereich bei langer Betriebsdauer angibt.

9. Dichte Einrahmung (32) nach Anspruch 1,
   **dadurch gekennzeichnet, dass** die Umfangsdichtung (10) im Wesentlichen symmetrisch bezüglich einer senkrechten Längsmittelebene ist bzw. bezüglich einer zur Längsebene quer verlaufenden Ebene, wobei jedes der beiden inneren bzw. äußeren Halterungsprofile (11) ein Profil aufweist, das im Wesentlichen komplementär zu dem des entsprechenden Einfügungssitzes (21-22) ist, zum Beispiel mit einem bezüglich der zur Längsebene quer verlaufenden Ebene symmetrischen Profil.

10. Dichte Einrahmung (32) nach Anspruch 1,
    **dadurch gekennzeichnet, dass** mindestens die Umfangsdichtung (10) deutlich asymmetrisch bezüglich einer senkrechten Längsmittelebene und/oder bezüglich einer senkrechten Querebene ist.

11. Dichte Einrahmung (32) nach Anspruch 10,
    **dadurch gekennzeichnet, dass** die asymmetrische Umfangsdichtung (10) mit einem inneren Einfügungssitz (21) ausgebildet ist, bei dem ein oberer vorstehender Steg (23) stärker eingezogen ist als der untere vorstehende Steg (25) desselben inneren Einfügungssitzes, während ein äußerer Einfügungssitz (22) einen unteren vorstehenden Steg (26) aufweist, der stärker eingezogen ist als der obere vorstehende Steg (24) desselben Einfügungssitzes (22), wobei zwei innere und äußere Halterungsprofile (11) im Wesentlichen zu den entsprechenden Einfügungssitzen (21-22) komplementäre Profile aufweisen, typischerweise mit einem spitzbogenförmigen senkrechten Querprofil mit starker unterer bzw. oberer Konvexität.

12. Dichte Einrahmung (32) nach einem der Ansprüche 1-11,
    **dadurch gekennzeichnet, dass** mindestens ein Halterungsprofil (11) ein Teil ist, welches durch Spritzguss und/oder Extrusion hergestellt ist, dessen Material einen Shore-Härte-Wert A aufweist, der größer als 70 bzw. 80 gemäß einer französischen Norm NF ist, wobei das Material zum Beispiel das mit NFL 17.250-5 oder NFL 17.261 bezeichnete Material sein kann.

13. Dichte Einrahmung (32) nach einem der Ansprüche 1 bis 12,
    **dadurch gekennzeichnet, dass** mindestens ein Halterungsprofil (11) eine zentrale konkave Ausnehmung (47) aufweist, in der mindestens ein steifes Element (48) angeordnet ist, zum Beispiel ein steifes Element (48) in Form einer Lamelle oder in analoger Form, welches in die zentrale Ausnehmung (47) des Halterungsprofils (11) im Wesentlichen von einem Abdeckungsende (14) bis zum anderen Ende (14) dieser dichten Einrahmung (32) integriert ist.

14. Dichte Einrahmung (32) nach einem der Ansprüche 1 bis 13,
    **dadurch gekennzeichnet, dass** mindestens ein Halterungsprofil (11) eine konkave Umfangsausnehmung aufweist, die sich von einem Abdeckungsende (14) bis zum gegenüberliegenden Abdeckungsende (14) der dichten Einrahmung (32) erstreckt, während mehrere steife Elemente (48) in verschiedenen Aufnahmebereichen (49) dieser zentralen Ausnehmung (47) verteilt über deren Umfang angeordnet sind, wobei zum Beispiel die Aufnahmebereiche in den im Wesentlichen geradlinigen Abschnitten des Halterungsprofils (11) angeordnet sind, während die gekrümmten Abschnitte, die typischerweise den Ecken des abnehmbaren Paneels (5) entsprechen, kein steifes Element (48) enthalten, wobei insbesondere mindestens einer der gekrümmten Abschnitte der zentralen Ausnehmung (47) mit einem Bereich des Beginns der Ablösung des Paneels (5) zusammenfällt.

15. Luftfahrzeug (1) mit einer durch ein abnehmbares Paneel (5) verschließbaren Öffnung (2, 8), wobei das Paneel über eine dichte Einrahmung (32) nach einem der Ansprüche 1 bis 13 mit der Öffnung verbunden ist, **dadurch gekennzeichnet, dass** das Luftfahrzeug (1) ein Drehflügelluftfahrzeug ist, die Öffnung (2) ein Teil des Rumpfes (3) oder einer Tür ist, das abnehmbare Paneel (5) eine Luke oder eine Klapptür oder etwas entsprechendes ist, und die dichte Einrahmung (32) austauschbar ist, bzw. eine dichte Einrahmung (32) zur Ersetzung einer getrennten Einrahmung ist.

**Claims**

1. Sealed frame (32) for a removable panel (5) that is removable from an aperture (8) in a wall (2) of an aircraft (1), said sealed frame (32) being substantially prismatic, mainly elongate along a longitudinal direction (X) so as to form two butt end faces, and being adaptable by longitudinal shaping to an inside opening profile of the aperture (8) for which it is intended, said sealed frame (32) having at least one peripheral seal (10) being of the generally tubular type and comprising at least: a central trunk (13) of substantially prismatic shape, mainly elongate along the longitudinal direction (X) so as to form two butt ends (14), said peripheral seal (10) being adaptable by longitudinal shaping to an inside opening profile of the aperture (8), a top reception slot (15) and a bottom reception slot (16), which slots extend from one butt end (14) to the other of the central trunk, substantially along a longitudinal elevation (XZ) midplane; transversely on either side of the top reception slot (15), respectively an inside top confinement flange (17) and an outside top confinement flange (18), and transversely on either side of the bottom reception slot (16), an inside bottom confinement flange (19) and an outside bottom confinement flange (20), defined between the inside top confinement flange (17) and the inside bottom confinement flange (19), an inside insertion recess (21) for an inside locking strip (11), and, defined between the outside top confinement flange (18) and the outside bottom confinement flange (20), an outside insertion recess (22) for an outside locking strip (11), on each confinement flange (17-20), a projecting ridge (23-26) for spring-clipping one of the locking strips (11), which ridge extends substantially in longitudinal elevation, these projecting ridges (23-26) being arranged in pairs of mutually facing ridges on either side in elevation of respective ones of the insertion recesses (21-22); and, connecting each of the four confinement flanges (17-20) to the central trunk (13), a respective longitudinal foldable shoulder (27-30), **characterised in that** said peripheral seal (10) provides a displacement angle (31) of at least 90° in a plane (YZ) that is perpendicular to the longitudinal direction (X), of at least one confinement flange (17-20) by deformation of the corresponding foldable shoulder (27-30) towards a concave portion of the corresponding insertion recess (21-22), from a normal operating state to a release state for releasing the removable panel (5), in the release state, the projecting ridge (23-26) of the folded confinement flange (17-20) being in abutment against an abutment section (33-36) of the corresponding insertion recess (21-22), which abutment section (33-36) is situated substantially between the central trunk (13) and the identically inside or outside confinement flange (17-20) that is opposite the folded-back confinement flange (17-20); at least one locking strip (11) having a concave core cavity (47) in which at least one rigid element (48) in the shape of a blade or the like is disposed, said rigid element (48) being incorporated in the core cavity (47) of said locking strip (11), substantially from one butt end (14) to the other end (14) of said sealed frame (32).

2. Sealed frame (32) according to claim 1, **characterised in that** said peripheral seal (10) satisfies a relationship relating a maximum half-dimension D2 of elevation of the peripheral seal (10), a maximum transverse half-dimension D4 of the peripheral seal (10), and a half-dimension D3 outside the insertion recess (21-22) in elevation of said peripheral seal (10), the half-dimension D3 outside the recess extending between a distal end that is either a top end or a bottom end of a corresponding confinement flange (17-20) that is opposite in elevation to the central trunk (13) and a distal end of a projecting ridge (23-26) formed by said confinement flange (17-20), this relationship between half-dimension D2 of elevation, transverse half-dimension D4, and half-dimension D3 outside the recess being such that: $\frac{1}{2}$ D2 $\geq$ D3 and $\frac{1}{2}$ D2 $\geq$ D4.

3. Sealed frame (32) according to claim 1 or 2, **characterised in that** the peripheral seal (10) satisfies a relationship such that:

   D2 $\geq$ D5;
   where D2 is a maximum half-dimension of elevation of the peripheral seal (10) and D5 is the maximum elevation dimension of a reception slot (15-16), said dimension D5 being greater, substantially by 5 to 10% of D2, than a distance [P1-P2] or minimum elevation dimension of an insertion recess (21-22), between the two projecting ridges (23-26) of said insertion recess (21-22).

4. Sealed frame (32) according to one of claims 1 to 3, **characterised in that** a minimum distance D1 of the central trunk (13), between an abutment section (33-36) of the insertion recess (21-22) and an end-wall surface (38) of the transversely narrowest reception slot (15-16), whether bottom or top, is no greater than a transverse dimension D6 of said end-wall surface (38) and/or the minimum distance D1 is no greater than half of a transverse dimension D6 of an end-wall surface (38) of the other reception slot (16-15), respectively whether top or bottom, which is the transversely widest slot and is opposite in elevation to the narrowest reception slot (15-16).

5. Sealed frame (32) according to one of claims 1 to 4, **characterised in that**, substantially in the middle in elevation of at least one insertion recess (21-22), either inside or outside, the central trunk (13) is provided with a clearance channel (39), extending longitudinally from one butt end (14) to the other of the central trunk (13), said clearance channel (39) having, in a transverse elevation plane (YZ), a concave rounded profile that is substantially defined by a radius of curvature R1; the dimension of said radius of curvature R1 satisfying the relationship: $[P3-P4] \geq 3 \times R1$, where: $[P3-P4]$ is an elevation distance between a top cusp P3 and a bottom cusp P4 of an insertion recess (21-22) that is either inside or outside (21-22), in which insertion recess (21-22) said clearance channel (39) is disposed, so that, in release state, the cusps, respectively top and bottom, remain substantially spaced apart from each other while the spring-clip projecting ridge (23-26) of said insertion recess (21-22) is in abutment against the corresponding abutment section (33-36).

6. Sealed frame (32) according to one of claims 1 to 5, **characterised in that** at least one projecting ridge (23-26), respectively top or bottom, of the same insertion recess (21-22) is of outside profile, as seen in transverse elevation section, that is complementary to a respectively bottom or top reception setback (41-44), said reception setback (41-44) of the insertion recess (21-22) being located at the location of the corresponding abutment section (33-36) so as to space said abutment section (33-36) apart from said projecting ridge (23-26), and thus to make it possible for a so-called increased displacement angle (31), e.g. from 95° to 105°, to be obtained by means of a so-called compact release state.

7. Sealed frame (32) according to one of claims 1 to 6, **characterised in that** said peripheral seal (10) is a one-piece part, made by injection-moulding and/or by extrusion, and made of a material that includes a silicone rubber of class higher than 50 in accordance with a French Standard NF, e.g. said material being designated by NFL17.250-5 or NFL17.261.

8. Sealed frame (32) according to claim 1, **characterised in that** at least one component material of said peripheral seal (10) and/or of the locking strip (11) is chosen from (Table No.01):

| K01 | NF L 17 151 | NF L 17 250 5 | NF L 17 261 | NF L 17 261 |
|---|---|---|---|---|
| K02 | Silicone elastomers Class 51 | Silicone rubbers Class 50 D 8 | Fluorosilicone rubbers Class 61 | Fluorosilicone rubbers Class 61 |
| K03 | 51 A 8 | 50 D 8 | 61 D 7 | 61 D 8 |
| K04 | 80±5 | 80±5 | 70±5 | 80±5 |
| K05 | 5 | 5 | 6 | 5.5 |
| K06 | 60 | 125 | 125 | 120 |
| K07 | / | 40 | 45 | 50 |
| K08 | / | -60 | -55 | -55 |
| K09 | -30°C to +100°C | -55°C to +225°C | -55°C to +180°C | -55°C to +180°C |

where:

- K01 indicates the designation of said material in a French Standard NF,
- K02 indicates the name of the material,
- K03 indicates a code of said material,
- K04 indicates a Shore A hardness value of said material,
- K05 indicates a minimum tensile strength value (in MPa) of said material,
- K06 indicates a minimum breaking elongation value (in %) of said material,
- K07 indicates a residual deformation after compression (after 70 hours at 100°C in air, in %) of said material,
- K08 indicates a non-brittle limit temperature value (in °C) of said material, and

- K09 indicates a range of temperatures for prolonged use.

9. Sealed frame (32) according to claim 1, **characterised in that** the peripheral seal (10) is substantially symmetrical about a longitudinal elevation midplane, or indeed about a longitudinal transverse plane, each of the two locking strips (11), respectively inside and outside, having a profile that is substantially complementary to the profile of the corresponding insertion recess (21-22), e.g. having a profile that is symmetrical about said longitudinal transverse plane.

10. Sealed frame (32) according to claim 1, **characterised in that** at least the peripheral seal (10) is substantially asymmetrical about a longitudinal elevation midplane and/or about a transverse elevation midplane.

11. Sealed frame (32) according to claim 10, **characterised in that** the asymmetrical peripheral seal (10) being formed with an inside insertion recess (21) in which a top projecting ridge (23) is closer than the bottom projecting ridge (25) of the same inside insertion recess (21); while an outside insertion recess (22) has a bottom projecting ridge (26) that is closer than the bottom projecting ridge (24) of the same insertion recess (22), two locking strips (11, respectively inside and outside, being of profiles substantially complementary to the corresponding insertion recesses (21-22), typically with transverse elevation profiles in the shape of highly convex ogives, respectively bottom and top.

12. Sealed frame (32) according to one of claims 1 to 11, **characterised in that** at least one locking strip (11) is made as a single piece by injection-moulding and/or by extrusion, and made of a material having a Shore A hardness value that is greater than 70 or indeed greater than 80 in accordance with a French Standard NF, e.g. said material being the one designated by NFL17.250-5 or NFL17.261.

13. Sealed frame (32) according to one of Claims 1 to 12, **characterised in that** at least one locking strip (11) has a concave core cavity (47) in which at least one rigid element (48) is disposed, e.g. a rigid element (48) in the shape of a blade or the like being incorporated in the core cavity (47) of said locking strip (11), substantially from one butt end (14) to the other end (14) of said sealed frame (32).

14. Sealed frame (32) according to one of claims 1 to 13, **characterised in that** at least one locking strip (11) has a so-called peripheral concave core cavity (47), extending from one butt end (14) to the opposite butt end (14) of the sealed frame (32), while a plurality of rigid elements (48) are disposed in reception sections (49) that are distinct from said core cavity (47), which sections are distributed around
its periphery; reception sections (49) being, for example, arranged in substantially rectilinear portions of the locking strip (11), while curved portions, typically corresponding to corners of removable panel (5), being without rigid elements (48), at least one of the curved portions of the core cavity (47), in particular, coinciding with an initiator zone for initiating jettisoning of the panel (5).

15. Aircraft (1) provided with at least one wall (2) that defines an aperture (8) for a removable panel (5), said panel (5) being connected to said wall (2) by a sealed frame (32) according to one of claims 1 to 13, **characterised in that** said aircraft (1) is a rotary-wing aircraft, the wall (2) being part of a fuselage (3) or of a door, the removable panel (5) being a window or a hatch or the like, and the sealed frame (32) being interchangeable, or indeed forming a sealed frame (32) for replacing a distinct frame.

Fig.1

Fig.2

Fig.3

Fig.4

Fig.5

Fig.6

**Fig.7**

SUP
15
D6
17 18
9;10;32
23 24
EXT
21
40 25 33 27 38 28
P1
19 39
XY [P1-P2]
INT P4 P3 [P3-P4]
35 P3
29 13 30
38 11 22
P4 P2
D5
26
D6 D3 D2
31 16 20
XZ D4
INF

Z Y

**Fig.8**

SUP
15 28 18
17 27 32
9;10
41 43
21 Z Y
19 11
INT 37
XY 42 13 EXT
29 30
31 44
20
INF 16

**Fig.9**

32
9;10 27 SUP
31
23 28 18
INT 37 40
Z Y 24 EXT
XY 11 22
25 26
29 30
INF 20

Fig.10

Fig.11

Fig.12

**Fig.13**

EXT

Z
SUP

Y

45 49 48 47

11;32

10

INF

46 48

INT

**Fig.14**

SUP 15

17 18

31

42 32;9

33 27 28

23 44

11 24

21 37 39 34

Z

Y 39 22

29 36

25 35 26

41 30 43

INT 19 20 EXT

16

INF

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2916418
- FR 2916419
- FR 2916420
- FR 2896768
- FR 1390412
- US 2654919 A
- FR 2205622
- DE 171519
- DE 24335325

- DE 916501
- DE 20217925
- EP 0249560 A
- EP 0175981 A
- EP 0748710 A
- FR 2858950
- FR 2548256
- FR 2766156
- FR 2935347